# EUROPÄISCHE PATENTSCHRIFT

(11) **EP 3 107 733 B1**
(45) Veröffentlichungstag und Bekanntmachung des Hinweises auf die Patenterteilung: **17.10.2018**
(21) Anmeldenummer: 15705595.5
(22) Anmeldetag: 18.02.2015
(51) Int. Cl.: B32B 37/22, B32B 39/00

(54) **VERFAHREN UND ANLAGE ZUM BESCHICHTEN VON ROLLENWARE**
METHOD AND SYSTEM FOR COATING ROLLED MATERIAL
PROCÉDÉ ET INSTALLATION DE REVÊTEMENT DE PRODUITS EN ROULEAU

(30) Priorität: 19.02.2014 EP 14155671
(43) Veröffentlichungstag der Anmeldung: 28.12.2016
(73) Patentinhaber: BASF SE, 67056 Ludwigshafen am Rhein (DE)
(72) Erfinder: HERRMANN, Jürgen, 67435 Neustadt (DE)
(74) Vertreter: BASF IP Association
(86) Internationale Anmeldenummer: PCT/EP2015/053353
(87) Internationale Veröffentlichungsnummer: WO 2015/124587

(56) Entgegenhaltungen:
- WO-A1-2007/114420
- WO-A1-2010/007042

## Beschreibung

Die Erfindung bezieht sich auf ein Verfahren zur Beschichtung von Rollenware wie beispielsweise Trägermaterialien, Textilbahnen, für die Herstellung von Velvet- bzw. velvetartigen Oberflächen in Kombination mit individueller Designgebung sowie eine dafür geeignete Produktionsanlage.

WO 2005/047549 A1 bezieht sich auf einen mit einer Zurichtung versehenen Träger. Der Träger weist eine velourartige feinfasrige Oberseite auf. Die Zurichtung ist an ihrer Sichtseite mit einer Narbenstruktur versehen. Bei dem Träger handelt es sich insbesondere um ein Narbenleder mit einer die Oberseite bildenden geschliffenen Narbenseite, ein Spaltleder mit geschliffener Oberseite oder ein synthetisches Velourmaterial mit einer aus Mikrofasern bestehenden Oberseite, wobei die Zurichtung aus einer verfestigten Kunststoffdispersion besteht und gesondert auf einer Unterlage mit einer der Narbenstruktur entsprechenden strukturierten Oberfläche hergestellt und über eine aus einer verfestigten, Polyurethan enthaltenden Kunststoffdispersion gebildete Verbindungsschicht, die auf der Oberseite des Trägers aufgebracht ist, mit dieser verbunden ist. Die Zurichtung weist über ihre gesamte Dicke durchgehende Kapillaren auf und besitzt sowohl im Bereich der Narbkuppen als auch im Bereich der Narbtäler im Wesentlichen dieselbe Dicke. Die Zurichtung ist über eine einzige dünne Verbindungsschicht mit dem Träger verbunden.

EP 1 859 066 B1 bezieht sich auf eine Matrize mit kleinen, näpfchenartigen Vertiefungen. Die Matrize dient der Herstellung einer mit einem flächigen Träger verbindbaren Beschichtung, die durch Auftragen einer flüssigen Kunststoffdispersion auf die aus einem hydrophoben flexiblen Kunststoff bestehende Oberfläche der Matrize und anschließendem Verfestigen der Kunststoffdispersion gebildet wird. Die Oberfläche weist einen Glanzgrad nach DIN 67530 bei einem Anstrahlwinkel von 60° von weniger als 2,2 auf und ist mit mikroskopisch kleinen näpfchenartigen Vertiefungen versehen. Diese sind durch eine Laserbehandlung der Oberfläche gebildet. Der Mittenabstand benachbarter näpfchenartiger Vertiefungen beträgt zwischen 50 µm und 150 µm und die Tiefe der näpfchenartigen Vertiefungen liegt zwischen 50 µm und 150 µm.

WO 2007/033968 A3 hat ein Verfahren zur Herstellung von Matrizen zur Herstellung von Dekorzurichtungen zum Gegenstand. Die Matrize dient insbesondere für die Herstellung einer mit einem flächigen Träger, insbesondere einem Leder oder einem Textilmaterial verbindbaren oberflächenstrukturierten Beschichtung. Diese ist durch Auftragen eines flüssigen Kunststoffmaterials auf die Oberfläche der Matrizen unter anschließender Verfestigung des Kunststoffmaterials gebildet. Die Matrize weist einer der Oberflächenstruktur der Beschichtung entsprechende Oberflächenstruktur auf, wobei die Oberflächenstruktur der Matrize durch Lasergravur erzeugt wird.

WO 2009/106503 A1 hat mehrschichtige Verbundmaterialien zum Gegenstand, die ein textiles Flächengebilde umfassen , ein Verfahren zu ihrer Herstellung und deren Verwendung. Es werden mehrschichtige Verbundmaterialien offenbart, die als Komponenten ein textiles Flächengebilde, gegebenenfalls mindestens eine Verbindungsschicht und eine Polyurethanschicht aufweisen, die Kapillaren enthält, die über die gesamte Dicke der Polyurethanschicht verlaufen, wobei das textile Flächengebilde und die Polyurethanschicht miteinander direkt oder über eine Verbindungsschicht verbunden sind.

WO 2010/007042 A1 hat ein Verfahren zur kontinuierlichen Herstellung von mehrschichtigen Verbundkörpern zum Gegenstand. Die mehrschichtigen Verbundkörper umfassen mindestens ein Trägermaterial, mindestens eine Verbindungsschicht und mindestens eine Polyurethanschicht, die Kapillaren aufweist, die über die gesamte Dicke der Polyurethanschicht verlaufen. Mit Hilfe einer Matrize wird die Polyurethanschicht hergestellt und diese Polyurethanschicht wird mit Hilfe eines Materials, das sich zu der Verbindungsschicht umwandelt, auf dem Trägermaterial fixiert. Die Matrize hat eine Temperatur zwischen 80°C und 170°C und weist eine Wärmekapazität auf, die im Bereich zwischen 100 bis 20.000 J/K · m² liegt.

Ein weiteres Verfahren zur kontinuierlichen Herstellung von mehrschichtigen Verbundkörpern ist aus WO 2007/114420 A1 bekannt. Ein Übertragen einer auf eine Matrize beschichtete Polyurethanschicht auf ein bahnförmiges Trägermaterial sowie ein Entnehmen der Matrize und ein Überführen dieser zu einer Behandlungsstrecke sind jedoch nicht offenbart.

Beschichtungsverfahren eines Trägermaterials, beispielsweise die Herstellung einer atmungsaktiven Lederzurichtung, verlaufen unter Einsatz von viel Handarbeit. Die Herstellung von Velvet- bzw. velvetartigen Oberflächen (Soft-Touch) in Kombination mit individueller Designgebung der Sichtseite des Trägermaterials, erfolgten durch die oben erwähnten viel Handarbeit erfordernden Herstellungsverfahren. Dadurch sind Anwendungsfelder wie zum Beispiel das der Textilindustrie nicht erschließbar. Dort wird ein Prozess zum Beschichten von Rollenware, so zum Beispiel Textil, Nonwovens Papier, etc. gewünscht, ohne die Rollenware zu zerschneiden oder vorkonfektionieren. Die Nachteile des bisherigen durch viel Handarbeit unterstützten Prozessablaufes liegen darin, dass auf einer Rolle angeliefertes Trägermaterial anwendungsspezifisch konfektioniert werden muss. Gemäß der heutigen Beschichtungsverfahren wird Stückware, die zu beschichten ist, händig auf vorbehandelte Matrizen aufgelegt. Die Bearbeitung ist auf eine Flächengröße von 160 cm x 160 cm beschränkt. Eine weitere Limitierung der bisherigen Verfahren liegt darin, dass die Taktzeit zu verarbeitender Matrizen bzw. zu verarbeitender Verbünde aus Trägermaterial und Matrizen pro Minute aufgrund der erforderlichen Verweilzeit in einer Presse begrenzt sind. Des Weiteren ist hinsichtlich der Taktzeit äußerst nachteilig, dass die erhaltene Fertigware von Hand aus der Produktionsanlage zu entnehmen ist und die Einzelstücke einen aufwendigen Transport sowie eine aufwendige Lagerung erfordern.

Mehrschichtige Verbundkörper, beispielsweise beschichtetes Leder, beschichtetes Textil oder beschichtete zellulosefaserhaltige Produkte erfreuen sich wachsender Beliebtheit. Insbesondere mit Polyurethan beschichtete Verbundkörper, wie sie beispielsweise in WO 2005/047549 A1 beschrieben sind, haben aufgrund der Kombination von zahlreichen recht unterschiedlichen Eigenschaften ein breites Anwendungsgebiet. Sie vereinen die mechanischen Eigenschaften von Leder mit Atmungsaktivität mit einem gefälligen Aussehen und einer angenehmen Haptik.

Es fehlen jedoch bisher Verfahren, die erlauben, derartige, insbesondere mehrschichtig ausgebildete Verbundkörper kostengünstig in größerer Stückzahl herzustellen. Die bisher angewandten Verfahren produzieren stückweise und erfordern einen hohen manuellen Arbeitsaufwand.

Den oben skizzierten Nachteilen des Standes der Technik wird durch das erfindungsgemäße Verfahren zur kontinuierlichen Herstellung mehrschichtiger Verbundkörper sowie durch eine Produktionsanlage, auf der dieses Verfahren durchgeführt werden kann, abgeholfen.

Nach dem erfindungsgemäßen Verfahren zur kontinuierlichen Herstellung von mehrschichtigen Verbundkörpern, umfassen diese mindestens ein Trägermaterial, mindestens eine Verbindungsschicht und mindestens eine Polyurethanschicht, die Kapillaren aufweist, die sich durch die gesamte Dicke der Polyurethanschicht erstrecken, wobei die nachfolgenden Verfahrensschritte durchlaufen werden:
a) Herstellung der mindestens einen Polyurethanschicht in einer Matrize, mit Durchlauf durch mindestens eine Beschichtungsstation und mehrere Heizstationen,
b) automatisierte Zufuhr der Matrize gemäß Verfahrensschritt a) zu einer Aufgabestelle einer Transferstraße für bahnförmiges Trägermaterial,
c) Aufbringen einer strukturierten Seite der Matrize auf das die Transferstraße kontinuierlich durchlaufende, bahnförmige Trägermaterial,
d) Behandlung eines Verbundes aus Matrize und bahnförmigem Trägermaterial in einer Presseinrichtung mit Übertragung der mindestens einen Polyurethanschicht auf das bahnförmige Trägermaterial,
e) Entnahme der Matrize vom bahnförmigen Trägermaterial,
f) Überführung der Matrize zu einer Behandlungsstrecke und
g) kontinuierliches Aufwickeln des bahnförmigen Trägermaterials an einer Aufwickelstation.

Durch das erfindungsgemäß vorgeschlagene Verfahren wird ein effizienterer und schnellerer Prozess bereitgestellt, der beispielsweise eine Behandlung von mindestens 5,12 m² bahnförmiges Trägermaterial pro Minute ermöglicht. Die maßgebliche, die Taktzeit des erfindungsgemäß vorgeschlagenen Verfahrens und der erfindungsgemäß vorgeschlagenen Produktionsanlage beeinflussende Stelle ist die Wartezeit, die durch die Behandlung eines Verbundes aus Matrize und bahnförmigem Trägermaterial in einer Presseinrichtung herrührt, in der eine Übertragung der mindestens einen Polyurethanschicht auf das bahnförmige Trägermaterial erfolgt.

Durch das erfindungsgemäß vorgeschlagene Verfahren lässt sich eine erhebliche Kosteneinsparung erreichen, da eine vorherige Konfektionierung des Trägermaterials entfallen kann; dieses wird durch eine Transferstraße der Produktionsanlage kontinuierlich gefördert, insbesondere an einer Abwickelstation abgewickelt und nach Fertigbehandlung an einer Aufwickelstation als fertig konfektionierte Rollenware wieder aufgewickelt. Da das bahnförmige Trägermaterial als Rollenware vorliegt, lässt sich eine erheblich einfachere Handhabung realisieren. Des Weiteren ist insbesondere im Gegensatz zu bisher bekannten "Piece to Piece"-Prozessen kein Personal für das Auflegen des Trägermaterials mehr erforderlich, ferner kann Personal eingespart werden, welches bisher eingesetzt wurde, um die Matrize von den bisher vorkonfektionierten Trägermaterialstücken abzuziehen. Da nunmehr lediglich die Matrize, in der mindestens eine Polyurethanschicht erzeugt wird, durch automatisierte Handhabungseinrichtung zugeführt und abgeführt werden kann, lässt sich im Gegensatz zur bisherigen weitestgehend manuellen Handhabung von vorkonfektionierten 1,6 m x 1,6 m großen Trägermaterialstücken ein erheblich einfacheres Handling erreichen, zudem lässt sich insbesondere der Abtransport fertig behandelter Rollenware von der Aufwickelstation am Ende der Transferstraße erheblich einfacher und kostengünstiger realisieren.

Bei den insbesondere mehrschichtigen Verbundkörpern, die durch das erfindungsgemäß vorgeschlagene Verfahren in industriellem Maßstab hergestellt werden können, handelt es sich um atmungsaktive Verbundkörper.

Die erfindungsgemäß vorgeschlagenen Verbundkörper umfassen mindestens ein Trägermaterial.

Als Trägermaterial kommen verschiedenste Materialien infrage, beispielsweise Textil, zellulosehaltige Materialien wie Papier und Pappe und vorzugsweise Leder, im Folgenden auch hier bereits als Textil, zellulosehaltiges Material bzw. Leder bezeichnet. Aber auch Kunstleder, Folien, insbesondere Metall- oder Polymerfolien und Polyurethan sind geeignet, insbesondere thermoplastisches Polyurethan, beispielsweise als Schaum. In einer möglichen Ausführungsvariante kann das Trägermaterial nicht atmungsaktiv sein, in einer bevorzugten Ausführungsvariante ist das Trägermaterial aus atmungsaktiven Materialien ausgewählt. Textil oder Textilien können verschiedene Erscheinungsformen aufweisen. Geeignet sind beispielsweise Gewebe, Filz, Gestricke (Strickwaren), Gewirke, Watten, Gelege und Mikrofasergewebe, weiterhin Vliesstoffe (Non-Wovens).

Bei Textil handelt es sich insbesondere um Vliesstoffe, Gewebe, Gewirke oder Gestricke. Textil kann gewählt werden aus Leinen, Schnüren, Seilen, Garnen oder Zwirnen. Textil kann natürlichen Ursprungs sein, so beispielsweise Baumwolle, Wolle oder Flachs oder synthetischen Ursprungs sein, so beispielsweise Polyamid, Polyester, modifizierte Polyester, Polyestermischgewebe, Polyamidmischgewebe, Polyacrylnitril, Triacetat, Acetat, Polycarbonat, Polyolefine wie beispielsweise Polyethylen und Polypropylen, Polyvinylchlorid, weiterhin Polyestermikrofasern und Glasfasergewebe. Ganz besonders bevorzugt sind Polyester, Baumwolle und Polyolefine wie beispielsweise Polyethylen und Polypropylen sowie ausgewählte Mischgewebe, gewählt aus Baumwolle-Polyester-Mischgewebe, Polyolefin-Polyester-Mischgewebe und Polyolefin-Baumwolle-Mischgewebe.

Textil kann unbehandelt sein oder behandelt, beispielsweise gebleicht oder gefärbt. Vorzugsweise ist Textil auf nur einer Seite beschichtet oder auch nicht beschichtet. Textil kann ausgerüstet sein, insbesondere ist Textil pflegeleicht und/oder flammfest ausgerüstet. Daneben kann Textil ein Flächengewicht im Bereich von 10 g/m² bis 500 g/m² aufweisen, bevorzugt sind 50 g/m² bis 300 g/m².

Bei zellulosehaltigem Material kann es sich um verschiedene Arten von zellulosehaltigen Materialien handeln, so sind unter dem Begriff Hemizellulose und Lignozellulose eingeschlossen. Bei zellulosehaltigem Material kann es sich um Holz oder um Spanplatten handeln. Der Begriff Holz umfasst hier beispielsweise lackiertes und unlackiertes Holz, Holz im Sinne der vorliegenden Erfindung kann biozid ausgerüstet sein, auch Furnier gehört zu Holz.

Bei dem zellulosehaltigen Material kann es sich auch um ein Kompositmaterial (Verbundwerkstoff) aus natürlichen Fasern und Kunststoff handeln, der auf Englisch auch als Wood Plastic Composite, oder allgemein abgekürzt als WPC bezeichnet wird. Bei dem zellulosehaltigen Material kann es sich um Pappe, Kartonage oder Papier handeln. Papier kann unbeschichtet oder vorzugsweise beschichtet oder nach amtlich bekannten Methoden ausgerüstet sein. Insbesondere kann es sich bei Papier um gebleichtes Papier handeln. Papier kann ein oder mehrere Pigmente enthalten beispielsweise Kreide, Kaolin oder TiO₂, Papier, Pappe und Kartonagen können ungefärbt (naturfarben) oder farbig sein. Papier, Papp und Kartonagen im vorliegenden Zusammenhang können unbedruckt oder bedruckt sein.

Bei Papier kann es sich um Kraftpapier handeln, oder um ein mit Polyacrylat-Dispersion ausgerüstetes Papier.

Es besteht die Möglichkeit, als Trägermaterial auch Kunststoff- oder Metallfolien, kurz als Folien bezeichnet, einzusetzen.

Unter Folien werden im vorliegenden Zusammenhang Flächengebilde aus Metall oder einem natürlichen oder vorzugsweisen synthetischen Polymer verstanden, die eine Dicke von 0,5 mm bis 1 mm, vorzugsweise 0,1 mm bis 0,5 mm und besonders bevorzugt bis 0,15 mm aufweisen. Kunststoff-Metallfolien werden im vorliegenden Zusammenhang auch unter dem Begriff Folien subsumiert.

Vorzugsweise ist Folie manuell, das heißt ohne Zuhilfenahme eines Werkzeugs biegbar. Unter Metallen sind Silber, Gold, Eisen, Kupfer, Zinn und insbesondere Aluminium bevorzugt ausgewählte Materialien. Unter Polymeren sind Polyolefine, wie Polyethylen und Polypropylen, weiterhin Polyester, Polyamid, Polycarbonat, Polyvinylchlorid, Polyurethan, Polymethylmethacrylat und Polystyrol bevorzugt, wobei unter Polyolefinen wie Polyethylen und Polypropylen nicht nur die betreffenden Ethylen- und Propylenhomopolymere, sondern auch Copolymere mit anderen Olefinen wie beispielsweise Acrylsäure oder 1-Olefinen zu verstehen sind. So sind unter Polyethylen insbesondere Ethylencopolymere mit 0,1 Gew.-% bis unter 50 Gew.-% eines oder mehrerer 1-Olefine, wie Propylen, 1-Buten, 1-Penten, 1-Hexen, 1-Octen, 1-Decen oder
1-Dodecen zu verstehen, wobei Propylen, 1-Buten und 1-Hexen bevorzugt sind. Unter Polypropylen sind insbesondere auch Propylencopolymere mit 0,1 Gew.-% bis unter 50 Gew.-% Ethylen und/oder eines oder mehrerer 1-Olefine wie 1-Buten, 1-Penten, 1-Hexen, 1-Octen, 1-Decen oder 1-Dodecen zu verstehen, wobei Ethylen, 1-Buten und 1-Hexen bevorzugt sind. Unter Polypropylen ist dabei bevorzugt im Wesentlichen isotaktisches Polypropylen zu verstehen.

Folien aus Polyethylen können aus HDPE oder LDPE oder LLDPE hergestellt werden. Unter Folien aus Polyamid sind solche bevorzugt, die sich von Nylon 6 ableiten. Unter Folien aus Polyester sind solche aus Polybutylenterephthalat und insbesondere aus Polyethylenterephthalat (PET) bevorzugt. Unter Folien aus Polycarbonaten sind solche bevorzugt, die sich von Polycarbonaten ableiten, die unter Verwendung von Bisphenol A hergestellt sind. Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder
Acrylaten umfasst. Unter Folien aus Polyurethan sind solche aus thermoplastischem Polyurethan, so genannte TPU-Folien bevorzugt. Folien können auch Verbundfolien umfassen, so beispielsweise Folien, die eine der vorstehend genannten Folien und eine Metallfolie oder Papier umfassen.

Bei dem Trägermaterial des vorzugsweise mehrschichtig ausgebildeten Verbundkörpers kann es sich auch um Leder handeln. Der Begriff Leder umfasst im Rahmen der vorliegenden Erfindung gegerbte Tierhäute, die zugerichtet oder vorzugsweise nicht zugerichtet sein können. Das Gerben kann nach verschiedensten Methoden erfolgen, beispielsweise mit Chromgerbstoffen, anderen Mineralischen Gerbstoffen wie beispielsweise Aluminiumverbindungen oder Zirkonverbindungen, mit Polymergerbstoffen, beispielsweise Homo- oder Copolymeren der (Meth)acrylsäure, mit Aldehyden, insbesondere mit Glutardialdehyd, mit synthetischen Gerbstoffen wie beispielsweise Kondensationsprodukten von aromatischen Sulfonsäuren mit Aldehyden, insbesondere mit Formaldehyd oder mit anderen Carbonylgruppen-haltigen Verbindungen wie beispielsweise Kondensationsprodukten von aromatischen Sulfonsäuren mit Harnstoff. Weitere geeignete Leder sind solche, die mit vegetabilen Gerbstoffen und/oder enzymatisch gegerbt sind. Auch Leder, die mit einer Mischung aus zwei oder mehr der vorstehend genannten Gerbstoffe gegerbt sind, sind geeignet.

Leder im Sinne der vorliegenden Erfindung kann weiterhin einen oder mehrere der an sich bekannten Arbeitsschritte durchlaufen haben, beispielsweise das Hydrophobieren, das Fetten, das Nachgerben oder das Färben.

Leder kann beispielsweise aus Häuten von Rindern, Schweinen, Ziegen, Schafen, Fischen, Schlangen, Wildtieren oder Vögeln hergestellt sein. Leder kann eine Dicke im Bereich von 0,2 mm bis 2 mm aufweisen. Vorzugsweise handelt es sich um Narbenleder. Leder kann frei von Rohhautfehlern sein, aber auch solches Leder, das Rohhautfehler aufweist, die beispielsweise von Verletzungen durch Stacheldraht, Kämpfen zwischen den Tieren oder Insektenstichen herrühren, sind geeignet. In einer Ausführungsform der vorliegenden Erfindung handelt es sich bei Leder um Spalt bzw. Spaltleder. Daneben kann es sich bei Leder um Velourleder bzw. Spaltvelour handeln.

Neben Leder kann als Trägermaterial im Sinne der vorliegenden Erfindung Kunstleder eingesetzt werden. Unter Kunstleder werden im Rahmen der vorliegenden Erfindung auch Vorstufen für Kunstleder mit umfasst und zwar solche, bei denen die oberste Schicht, das heißt eine oder die Deckschicht fehlt. Bei Kunstleder handelt es sich im Rahmen der vorliegenden Erfindung um mit Kunststoff beschichtete, vorzugsweise textile Flächengebilde mit oder ohne Deckschicht, wobei die Deckschicht, so sie vorhanden ist, ein lederähnliches Aussehen hat. Beispiele für Kunstleder sind Gewebekunstleder, Vlieskunstleder, Faserkunstleder, Folienkunstleder und Schaumkunstleder. Auch Erzeugnisse mit zwei Deckschichten wie beispielsweise Vlieskunstleder fallen unter den Begriff Kunstleder. Besonders bevorzugte Kunstleder sind atmungsaktive Kunstleder auf Polyurethanbasis, wie sie zum Beispiel beschrieben sind in Harro Träubel, New Materials Permeable to Water Vapor, Springer Verlag 1999. Weiterhin bevorzugt sind Trägermaterialien, bei denen ein offenzelliger Polyurethanschaum auf einen textilen Träger aufgebracht wird, zum Beispiel als Schlagschaum oder durch direkte Hinterschäumung.

In einer Ausführungsmöglichkeit des vorliegenden Verfahrens kann das Trägermaterial aus Leder, Kunstleder, Metall- oder Kunststofffolien, Textil oder zellulosehaltigen Materialien ausgewählt werden.

In einer bevorzugten Ausführungsform der vorliegenden Erfindung handelt es sich bei dem Trägermaterial um ein solches, welches zu Beginn des erfindungsgemäßen Herstellungsverfahrens von Speichern genommen wird, beispielsweise kontinuierlich von einer oder mehreren Rollen, d.h. Rollenware.

Erfindungsgemäß hergestellte, insbesondere mehrschichtig ausgeführte Verbundkörper weisen weiterhin mindestens eine Verbindungsschicht auf. Bei der Verbindungsschicht kann es sich um eine durchbrochene, das heißt nicht vollflächig ausgeprägte Schicht handeln oder um eine vollflächig aufgetragene Schicht. Vorzugsweise handelt es sich bei der Verbindungsschicht um eine Schicht eines gehärteten, organischen Klebstoffs. Die Verbindungsschicht wird gebildet durch ein Material, welches sich zu einer Verbindungsschicht umwandelt, beispielsweise durch Einwirkung von Wärme.

Bei der Verbindungsschicht kann es sich um eine punktförmig, streifenförmig oder gitterförmig, beispielsweise in Form von Rauten, Rechtecken, Quadraten oder einer Bienenwabenstruktur aufgebrachte Schicht handeln. Dann kommt die mindestens eine Polyurethanschicht mit dem Trägermaterial, welches vorzugsweise bahnförmig vorliegt, an den Lücken der Verbindungsschicht in Berührung.

In einer möglichen Ausführungsvariante der Verbindungsschicht handelt es sich bei dieser um eine Schicht eines gehärteten, organischen Klebstoffs, beispielsweise auf Basis von Polyvinylacetat, Polyacrylat und insbesondere Polyurethan, vorzugsweise von Polyurethanen mit einer Glastemperatur unter 0°C. Die Härtung des organischen Klebstoffs kann beispielsweise thermisch, durch aktinische Strahlung oder durch Altern erfolgt sein. In einer weiteren Ausführungsmöglichkeit der Verbindungsschicht kann es sich bei dieser um ein Klebenetz handeln. Die mindestens eine Verbindungsschicht weist eine maximale Dicke von 100 µm, bevorzugt 50 µm, besonders bevorzugt 30 µm, ganz besonders bevorzugt 15 µm auf.

Die Verbindungsschicht kann Mikrohohlkugeln enthalten. Unter Mikrohohlkugeln sind im vorliegenden Zusammenhang kugelförmige Partikel mit einem mittleren Durchmesser im Bereich von 5 µm bis 20 µm aus polymerem Material, insbesondere aus halogeniertem Polymer wie beispielsweise Polyvinylchlorid oder Polyvinylidenchlorid oder Copolymer von Vinylchlorid mit Vinylidenchlorid zu verstehen. Mikrohohlkugeln können leer sein oder vorzugsweise mit einer Substanz gefüllt sein, deren Siedepunkt geringfügig tiefer liegt als die Zimmertemperatur, beispielsweise mit n-Butan und insbesondere mit Isobutan. In einer Ausführungsmöglichkeit können die Mikrohohlkugeln auch mit Isopentan gefüllt sein.

Gemäß der erfindungsgemäß vorgeschlagenen Lösung kann die mindestens eine Polyurethanschicht, insbesondere in Bahnform vorliegenden Trägermaterial über mindestens zwei Verbindungsschichten verbunden sein, die eine gleiche oder eine unterschiedliche Zusammensetzung aufweisen. So kann die eine der Verbindungsschichten ein Pigment enthalten und die andere der beiden Verbindungsschichten pigmentfrei vorliegen. In einer Variante kann die eine Verbindungsschicht Mikrohohlkugeln enthalten, die andere Verbindungsschicht hingegen nicht.

Das erfindungsgemäß vorgeschlagene Verfahren zur kontinuierlichen Herstellung von mehrschichtigen Verbundkörpern wird im Folgenden näher beschrieben:
Zur Durchführung des erfindungsgemäßen Verfahrens wird so vorgegangen, dass mit Hilfe einer Matrize mindestens eine Polyurethanschicht hergestellt wird und diese mindestens eine Polyurethanschicht mit Hilfe eines Materials, welches sich zu der mindestens einen Verbindungsschicht umwandelt, auf dem vorzugsweise in Bahnform vorliegenden Trägermaterial fixiert. Die Matrize weist eine Temperatur auf, die im Bereich zwischen 80°C und 270°C liegt und umfasst einen Wärmeträger mit einer Wärmekapazität im Bereich von 100 J/K · m² bis 20.000 J/K · m². Dabei erfolgt vorzugsweise das Fixieren und/oder das Aufbringen von Material, welches sich zu Verbindungsschicht umwandelt, kontinuierlich.

Die mindestens eine Polyurethanschicht wird mit Hilfe mindestens einer Formulierung mindestens eines Polyurethans hergestellt. Als Formulierungen sind wässrige Emulsionen, Dispersionen oder Lösungen bevorzugt, aber auch Lösungen oder Dispersionen in hinreichend flüchtigen organischen Lösungsmitteln sind dafür geeignet. Bevorzugt sind Formulierungen in nicht brennbarem Medium, insbesondere in Wasser.

Die Matrize weist eine Temperatur im Bereich von 80°C bis 170°C auf, bevorzugt zwischen 85°C bis 130°C und besonders bevorzugt bis 110°C. Bei der Temperatur handelt es sich jeweils um die Oberflächentemperatur zu Beginn des Aufbringens von der mindestens einen Polyurethanschicht. Vorzugsweise liegt die Oberflächentemperatur auch am Ende des Aushärtens von Polyurethan zu der mindestens einen Polyurethanschicht im Bereich oberhalb von über 60°C. Die Matrize hat eine Wärmekapazität, die im Bereich von 100 J/K · m² bis 20.000 J/K · m², bevorzugt 500 J/K · m² bis 15.000 J/K · m² liegt. Dabei betreffen Quadratmeter jeweils die Oberfläche der Matrize. Die Wärmekapazität ist dabei diejenige Wärmemenge, die erforderlich ist, um einen Quadratmeter der Matrize an der Oberfläche um ein Kelvin zu erwärmen.

In einer möglichen Ausführungsvariante umfasst die eingesetzte Matrize zusätzlich einen Wärmeträger. Der oder die Wärmeträger ist bzw. sind geeignet, eine hinreichend hohe Temperatur der Matrize aufrecht zu erhalten, so dass Wasser und/oder organische(s) Lösungsmittel hinreichend schnell verdampfen, während die mindestens eine Polyurethanschicht hergestellt wird. In denjenigen Ausführungsformen, in denen die Matrize einen Wärmeträger umfasst, sind die Werte für die Wärmekapazität auf die Kombination aus eigentlicher Matrize und Wärmeträger bezogen.

Beispielsweise kann es sich bei an Matrizen eingesetzten Wärmeträger um einen geheizten oder heizbaren Metallkörper handeln, beispielsweise in Form eines Bandes oder in Form einer oder mehrerer Platten oder Barren, die miteinander verbunden sein können, oder in Form eines Gitters oder in Form von verbundenen Ringen, wie sie einem Kettenhemd ähneln. Geheizte Metallkörper können beispielsweise geheizt werden mit elektrischem Strom, mit Wasserdampf mit einer Temperatur oberhalb von 110°C oder vorzugsweise mit Heißdampf, d.h. Wasserdampf mit einer Temperatur im Bereich von 300°C bis 400°C. Derartige geheizte Metallkörper können kontinuierlich geheizt werden oder semikontinuierlich, d.h. Heizmedium wird dann zugeführt, wenn eine bestimmte Mindesttemperatur unterschritten ist und nach dem Überschreiten einer gewissen Höchsttemperatur wird die Zufuhr von Heizmedium wieder unterbrochen.

In einer anderen Ausführungsform werden Wärmeträger aus Metallkörpern mit hoher Wärmekapazität, insbesondere im Bereich on 100 J/K · m² bis 20.000 J/K · m², beispielsweise Metallplatten eingesetzt. Derartige Metallplatten werden an einer Stelle der zur Durchführung des erfindungsgemäß vorgeschlagenen Verfahrens geeigneten Produktionsanlage aufgeheizt und an anderer Stelle zur Herstellung der mindestens einen Polyurethanschicht eingesetzt.

In einer anderen Ausführungsform handelt es sich bei dem Wärmeträger um Metall, welches in die Matrize integriert ist. Beispielsweise sind Metallfolien, flexible Metallgitter nach Art eines Metallnetzes, weiterhin Metallstäbe, Waben oder Metallwolle, bevorzugt sind beheizbare Metalldrähte. Bei dem Wärmeträger kann es sich auch um einen elektrisch beheizten Draht oder eine Kombination von elektrisch beheizten Drähten, die beispielsweise in die eigentliche Matrize integriert sind, handeln. Die Kombination von elektrisch beheizten Drähten kann beispielsweise mehrere Spiralen beinhalten.

In einer weiteren Ausführungsmöglichkeit handelt es bei der Matrize um eine Silikonmatrize, mit einer besonders hohen Dicke, beispielsweise im Bereich von 0,5 cm bis 2 cm, bevorzugt bis 1 cm. Derartig dicke Matrizen und insbesondere derart dicke Silikonmatrizen weisen selbst eine besonders hohe Wärmekapazität auf und sind in der betreffenden Ausführungsform selbst die Wärmeträger.

Bei der Matrize kann es sich beispielsweise um ein mit Silikon überzogenes Material, beispielsweise Metall, insbesondere Stahl oder Aluminium handeln. Bei Matrizen, die als Silikonmatrizen ausgeführt sind, weisen diese eine besonders hohe Dicke auf, wobei die betreffende Matrize und insbesondere die betreffende Silikonmatrize mit mindestens einem Material dotiert ist, das selbst eine hohe Wärmekapazität aufweist, beispielsweise Graphit, Öle, Wachse, insbesondere Paraffinwachse und Latentwärmespeicher, insbesondere verkapselt ausgebildete Latentwärmespeicher, wie sie beispielsweise aus WO 2004/092299 A1 bekannt sind.

In einer bevorzugten Ausführungsform des erfindungsgemäß vorgeschlagenen Verfahrens verwendet man eine Silikonmatrize, die während der Durchführung des Verfahrens kontinuierlich oder diskontinuierlich mit Mikrowellen beheizt wird. Die Matrize kann als EndlosBand ausgebildet sein, welches über Rollen an verschiedenen Apparatebauteilen vorbeigeführt wird, an denen Arbeitsschritte durchgeführt werden. Als Apparateteile sind beispielsweise Sprühdüsen, Sprühpistolen, Kalander, halbkontinuierlich arbeitende Pressen, insbesondere Rollenpressen, Flachbettkaschiermaschinen, weiterhin Lichtquellen, Wärmevorrichtungen (IR-Strahler) und Trocknungsvorrichtungen wie beispielsweise Öfen oder Ventilatoren zu nennen.

In einer anderen Ausführungsmöglichkeit kann die Matrize als eine Matrize ausgebildet sein, die auf eine Metallrolle oder eine Metalltrommel aufgebracht ist, was "nahtlos" erfolgt, d.h. mit möglichst geringer Naht zwischen dem Anfang und dem Ende der Matrize, wodurch sich die gesamte Länge der Matrize ausnutzen lässt.

Bei dem erfindungsgemäß vorgeschlagenen Verfahren können Matrizen eingesetzt werden, die einen Wärmeträger mit einer Wärmekapazität im Bereich von 100 J/K · m² bis 20.000 J/K · m² aufweisen. In einer Ausführungsform des erfindungsgemäßen Herstellungsverfahrens wird so vorgegangen, dass man mit Hilfe einer Matrize, die mindestens eine Polyurethanschicht bildet, mindestens einen organischen Klebstoff vollflächig oder partiell auf ein insbesondere in Bahnform vorliegendes Trägermaterial und/oder auf die mindestens eine Polyurethanschicht aufbringt und dann die mindestens eine Polyurethanschicht mit dem bahnförmigen Trägermaterial punktförmig, streifenartig oder flächig verbindet. Der von der Matrize umfasste Wärmeträger stellt sicher, dass die Matrize während der gesamten Zeit, in der organischer Klebstoff auf die mindestens eine Polyurethanschicht aufgebracht wird, eine ausreichend hohe Temperatur aufweist und diese beibehält.

In einer vorteilhaften Ausführungsmöglichkeit des erfindungsgemäß vorgeschlagenen Verfahrens wird so vorgegangen, dass man zunächst den mindestens einen Polyurethanfilm bereitstellt, mindestens ein bahnförmiges Trägermaterial oder den mindestens einen Polyurethanfilm oder beides auf je einer Fläche teilweise, beispielsweise musterförmig mit organischem Klebstoff versieht, beispielsweise bestreicht oder besprüht und dann die beiden Flächen miteinander in Kontakt bringt. Danach kann man noch den so erhältlichen Verbund aneinanderpressen oder thermisch behandeln oder unter Erwärmen aneinanderpressen. Zum Aneinanderpressen kann man beispielsweise ein System gegenläufig rotierender temperierbarer Rollen bzw. Walzen einsetzen.

Ein Polyurethanfilm bildet die spätere, mindestens eine Polyurethanschicht des erfindungsgemäß hergestellten mehrschichtigen Verbundkörpers. Der Polyurethanfilm kann wie folgt hergestellt werden:
Das Aufbringen von vorzugsweise wässriger Polyurethan-Dispersion auf die Matrize kann nach an sich bekannten Methoden erfolgen, insbesondere durch kontinuierliches Aufsprühen, beispielsweise mit einer Sprühpistole. Die Matrize kann eine glatte Oberfläche aufweisen, vorzugsweise ist diese jedoch strukturiert. Die Strukturierung von Matrizen erfolgt in der Regel durch Lasergravur oder durch Abformen. Die Strukturierung kann beispielsweise einem Muster entsprechen. Besonders bevorzugt entspricht die Strukturierung einem Negativ eines Narbenmusters von Leder oder dem Negativ eines Nubuk. Andere besonders bevorzugte Strukturierungen entsprechen den Oberflächen von Holz, technische Oberfläche wie beispielsweise einer Carbonoptik, wobei auch 3D-Effekte mit umfasst sind. Die Strukturierungen können zusätzlich zu der eigentlichen Strukturierung auch bildhafte Designs, Namenszüge, Familienwappen oder ein oder mehrere Firmenlogos umfassen.

In einer vorteilhaften Durchführungsmöglichkeit des erfindungsgemäß vorgeschlagenen Verfahrens wird eine Matrize bereitgestellt, die eine elastomere Schicht oder auch einen Schichtverbund aufweist, umfassend eine elastomere Schicht auf einem Träger, wobei die elastomere Schicht ein Bindemittel sowie gegebenenfalls weitere Zusatz- und Hilfsstoffe umfasst. Die Bereitstellung der Matrize kann dann die folgenden Schritte umfassen:
1) Aufbringen eines flüssigen Bindemittels, das gegebenenfalls Zusatz- und/oder Hilfsstoffe enthält, auf eine gemusterte Oberfläche, beispielsweise eine Patrize oder ein Originalmuster,
2) Aushärten des Bindemittels, beispielsweise durch thermisches Aushärten, Strahlungshärtung oder durch Alternlassen,
3) Trennen des so erhältlichen strukturierten Mediums und gegebenenfalls Aufbringen auf einen Träger, beispielsweise eine Metallplatte oder einen Metallzylinder,
4) gegebenenfalls Verbinden von mehreren so erhältlichen kleineren Matrizen zu einer größeren Matrize, insbesondere zu einem Silikonband.

In einer Durchführungsmöglichkeit des erfindungsgemäß vorgeschlagenen Verfahrens wird flüssiges Silikon auf ein Muster aufgegeben, man lässt das Silikon altern und somit zu einer Silikonfolie aushärten, danach wird diese abgezogen. Die Silikonfolie wird dann auf einen Träger geklebt, beispielsweise eine Metallplatte, einen Metallzylinder oder eine Metallfolie. Die Matrize umfasst eine lasergravierbare Schicht oder Schichtverbund, der eine lasergravierbare Schicht umfasst, wobei die lasergravierbare Schicht ein Bindemittel sowie gegebenenfalls weitere Zusatz- und Hilfsstoffe umfasst. Die lasergravierbare Schicht ist vorzugsweise außerdem Elastomer.

Die lasergravierbare Schicht, die vorzugsweise Elastomer ist, oder der Schichtverbund können vorzugsweise auf einem Träger vorliegen. Beispiele für geeignete Träger umfassen Gewebe und Folien aus Polyethylenterephtalat (PET), Polyethylennaphthalat (PEN), Polybutylenterephthalat (PBT), Polyethylen, Polypropylen, Polyamid oder Polycarbonat, bevorzugt PET- oder PEN-Folien. Ebenfalls als Träger geeignet sind Papier und Gewirke, beispielsweise aus Zellulose. Als Träger können auch konische oder zylindrische Röhren aus den besagten Materialien (Sleeves) eingesetzt werden. Als Sleeves eignen sich Glasfasergewebe oder Verbundmaterialien aus Glasfasern und polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl oder anderen Eisenlegierungen.

In einer Ausführungsform der vorliegenden Erfindung kann der Träger zur besseren Haftung der lasergravierbaren Schicht mit einer Haftschicht beschichtet sein. In einer anderen Ausführungsform der erfindungsgemäß vorgeschlagenen Lösung ist keine Haftschicht erforderlich.

Dem erfindungsgemäß vorgeschlagenen Verfahren zur kontinuierlichen Herstellung mehrschichtiger Verbundkörper folgend, wird die Durchführung des Verfahrensschrittes, wonach die mindestens eine Polyurethanschicht in einer Matrize mit Durchlauf durch mindestens eine Beschichtungsstation und mehrerer Heizstationen erfolgt, innerhalb der Behandlungsstrecke gegenläufig zur Förderrichtung des bahnförmigen Trägermaterials vorgenommen. Die von der Transferstraße entnommenen Matrizen werden von ihrer Entnahmestelle der Behandlungsstrecke zur Wiederaufarbeitung der Matrizen zugeführt und von dieser nach Art eines Kreislaufes der Transferstraße, auf der das bahnförmige Trägermaterial verarbeitet wird, an der Aufgabestelle wieder zugeführt.

In weiterer Ausgestaltung des erfindungsgemäß vorgeschlagenen Verfahrens wird die die mindestens eine Polyurethanschicht ausformende Matrize während der Durchführung des Verfahrensschrittes der Herstellung der mindestens einen Polyurethanschicht mit Durchlauf durch mindestens eine Beschichtungsstation und mehrerer Heizstationen von einer Entnahmeposition zu ihrer Aufgabeposition zurücktransportiert.

Der erfindungsgemäß vorgeschlagenen Lösung folgend, bestehen zwischen der Transferstraße zur Förderung des bahnförmigen Trägermaterials und der Behandlungsstrecke für die Behandlung der Matrizen sowohl eine automatisierte Zufuhr für die Matrizen, wie auch ein automatisierter Abtransport der Matrizen, wodurch bisher manuell erfolgende Arbeitsschritte entfallen können, und die Durchlaufzeiten des erfindungsgemäß vorgeschlagenen Verfahrens erheblich gesteigert werden.

Der erfindungsgemäß vorgeschlagenen Lösung folgend, werden die Matrizen nach ihrer Entnahme an der Entnahmestelle aus der Transferstraße noch während des Abtransportes von der Transferstraße zur Behandlungsstrecke gewendet und erreichen die Behandlungsstrecke mit nach oben zugänglicher, insbesondere strukturierter Seite, so dass die von der Transferstrecke entnommenen Matrizen unmittelbar in den Wiederaufbereitungsprozess, der in der Behandlungsstrecke für die Matrizen erfolgt, eingeschleust werden können.

In weiterer Ausgestaltung der erfindungsgemäß vorgeschlagenen Lösung wird das bahnförmige Trägermaterial als Rollenware in Förderrichtung zu einer Aufwickelstation gefördert und gleichzeitig kontinuierlich als Rollenware von einem Rollenkern abgewickelt. Bei dem eingesetzten bahnförmigen Trägermaterial kann entweder ein mit Sprühkleber versehenes Trägermaterial eingesetzt werden, oder ein Trägermaterial, das mit einem Netzkleber versehen wird, oder es kann ein bereits mit einem wärmeaktivierbaren klebebeschichtetes bahnförmiges Trägermaterial eingesetzt werden.

Die in der Behandlungsstrecke gegenläufig zur Förderrichtung des bahnförmigen Trägermaterials in der Transferstraße behandelten Matrizen, werden über mindestens eine automatisierbare Handhabungseinrichtung, beispielsweise Handhabungsroboter, mit ihrer strukturierten Seite an einer Aufgabestelle auf das in Förderrichtung geförderte bahnförmige Trägermaterial aufgelegt. Dies kann dadurch erreicht werden, dass sich die automatisierte Handhabungseinrichtung zu Zufuhr der "frischen" Matrizen in Förderrichtung mit gleicher Geschwindigkeit wie das bahnförmige Trägermaterial mitbewegt.

Beim erfindungsgemäß vorgeschlagenen Verfahren zur kontinuierlichen Herstellung mehrschichtiger Verbundkörper wird bei Passage einer beheizbaren Presseinrichtung innerhalb eines Verbundes aus Matrize und bahnförmigem Materialabschnitt mindestens eine in der Matrize enthaltene Polyurethanschicht auf den Teil des bahnförmigen Materials transferiert, der von der strukturierten Seite der Matrize überdeckt ist. Abhängig von der Fördergeschwindigkeit des bahnförmigen Trägermaterials in Förderrichtung, abhängig vom herrschenden Temperaturniveau zur Sicherstellung des vollständigen Transfers der mindestens einen Polyurethanschicht von der Matrize auf die Oberseite des zu behandelnden Trägermaterials, wird die Länge der beheizbaren Presseinrichtung ausgewählt.

Nach der Passage der Presseinrichtung, in der nach dem erfindungsgemäß vorgeschlagenen Verfahren die mindestens eine Polyurethanschicht auf das bahnförmige Trägermaterial transferiert wird, passiert der Verbund aus bahnförmigem Trägermaterial und Matrize eine Kühleinrichtung. In dieser erfolgt sowohl eine Abkühlung der Matrize als auch des bahnförmigen Trägermaterials, welches nun mit der mindestens einen Polyurethanschicht beschichtet ist. Nach Passage der Kühleinrichtung wird das fertigbehandelte bahnförmige Trägermaterial in einer Aufwickelstation aufgewickelt, liegt nunmehr als Rollenware vor und kann über automatisierbare Handhabungseinrichtungen, beispielsweise führerlose Transportsysteme, Gabelstapler oder dergleichen einfach gehandhabt werden, im Gegensatz zu bei bisherigen Verfahren eingesetzten vorkonfektionierten, beschädigungsanfälligen Abschnitten vorkonfektionierten Trägermaterials.

Eine Entnahme der Matrize vom bahnförmigen Trägermaterial erfolgt hinter der Kühleinrichtung, so dass die Matrize erneut einer Wiederaufarbeitung in der Behandlungsstrecke zur Beschichtung zugeführt werden kann. Insbesondere wird die vom bahnförmigen Trägermaterial an der Entnahmestelle entnommene Matrize während des Abtransportes von der Transferstraße und der Zufuhr zur Behandlungsstrecke gewendet, so dass die Matrize die Behandlungsstrecke mit ihrer strukturierten Seite erreicht, die frei zugänglich ist. Prinzipiell besteht die Möglichkeit, dass eine jede Matrize ein anderes Design, d.h. eine andere strukturierte Oberfläche aufweist.

Die Erfindung bezieht sich darüber hinaus auch auf eine Produktionsanlage zur Durchführung des Verfahrens zur Herstellung mehrschichtiger Verbundkörper. Die erfindungsgemäß vorgeschlagene Produktionsanlage umfasst zumindest nachfolgende Komponenten:
- Eine Transferstraße zur Behandlung bahnförmigen Trägermaterials mit einer beheizbaren Presseinrichtung,
- einer Entnahmeposition für auf das bahnförmige Trägermaterial einwirkende Matrizen,
- einen automatisierten Abtransport der Matrizen und deren Zufuhr zu einer Behandlungsstrecke für die Wiederaufarbeitung der Matrizen,
- eine Wiederaufarbeitung der Matrizen in der Behandlungsstrecke und
- eine automatisierte Zufuhr der Matrizen zur Transferstraße und Aufgabe/Zufuhr der Matrizen auf das in Förderrichtung kontinuierlich geförderte bahnförmige Trägermaterial.

Durch die erfindungsgemäß vorgeschlagene Produktionsanlage wird die Möglichkeit geschaffen, mehrschichtige Verbundkörper in einem kontinuierlich ablaufenden, keine Stillstandszeiten aufweisenden Fertigungsprozess zu produzieren. Die Produktionsanlage, wie erfindungsgemäß vorgeschlagen, erlaubt eine wesentlich effizientere, da schnellere Fertigung von bahnförmigem Trägermaterial, welches als Rollenware zugeführt und als Rollenware nach Fertigbehandlung weiter gehandhabt werden kann. Die erfindungsgemäß vorgeschlagene Produktionsanlage erlaubt eine Fertigung von 5,12 m²/min von bahnförmigem Material, wobei diese Ausbringung noch durch eine Wartezeit in der Presseinrichtung variiert werden kann. Aufgrund des Umstandes, dass das Trägermaterial in Bahnform als Rollenware vorliegt, entfällt dessen Vorkonfektionierung sowie die mit der Vorkonfektionierung einhergehenden Kosten. Ein bahnförmiges, aufgewickeltes Material lässt sich wesentlich einfacher und sicherer handhaben als vorkonfektionierte Trägermaterialstücke. Des Weiteren ist kein Personal erforderlich für das Auflegen der Matrizen auf die bisher einzeln und diskret beschichteten vorkonfektionierten Trägermaterialabschnitte. Des Weiteren braucht kein Personal vorgehalten zu werden für das Abziehen (Demolding) der Matrizen am Trägermaterial. Da das fertig behandelte bahnförmige Trägermaterial nach Fertigstellung wieder aufgewickelt wird, lässt sich die daraus entstehende Rollenware wesentlich einfacher handhaben, verglichen mit vorkonfektionierten Trägermaterialteilen, die in der Regel manuell gehandhabt werden und einem hohen Beschädigungsrisiko unterliegen.

Die erfindungsgemäß vorgeschlagene Produktionsanlage umfasst die Presseinrichtung, die vorzugsweise beheizbar ausgelegt ist, die als eine Rollenpresse oder eine Flachbettkaschieranlage ausgestaltet sein kann. Die vorzugsweise beheizbar ausgebildete Presseinrichtung, welche in Förderrichtung des bahnförmigen Materials in die Transferstraße integriert ist, kann temperierbare Walzen aufweisen, die die Ober- bzw. Unterseite des Förderweges des bahnförmigen Materials durch die beheizbare Presseinrichtung definieren. Zwischen die Presseinrichtung läuft der aus dem bahnförmigen Trägermaterial und darauf befindlicher Matrize, die mindestens eine transferierbare Polyurethanschicht enthält durch, so dass aufgrund des in der Presseinrichtung herrschenden Druckes und der dort herrschenden Temperatur, die in der Matrize vorbereitete an dieser anhaftende mindestens eine Polyurethanschicht und ein Polyurethanschichtenverbund aufgrund des Druckes und der Wärme auf die Oberseite des zu behandelnden bahnförmigen Materials transferiert wird.

Die Zufuhr der Matrizen, die zuvor in der entsprechenden Behandlungsstrecke vorbereitet werden, zur Transferstraße, erfolgt durch eine automatisierbare Handhabungseinrichtung, die beispielsweise als ein Roboterarm oder ein anderes automatisiertes Handhabungssystem beschaffen sein kann. Die Produktionsanlage umfasst darüber hinaus eine der beheizbaren Presseinrichtung nachgeschaltete Kühleinrichtung, in welcher der aus Matrize und bahnförmigem Material gebildete Verbund abgekühlt wird, wobei sich an die Kühleinrichtung eine Entnahmeposition für die Matrizen anschließt. An besagter Entnahmeposition werden die Matrizen ebenfalls durch eine automatisierbare Handhabungseinrichtung, wie beispielsweise einen Handhabungsroboter von der Oberseite des behandelten bahnförmigen Materials entnommen, während des Abtransportes gewendet und im gewendeten Zustand, d.h. mit ihrer strukturierten Seite nach oben weisend, der Behandlungsstrecke zur Wiederaufarbeitung der Matrizen zugeführt.

Das bahnförmige Trägermaterial durchläuft die Transferstraße in entgegengesetzter Richtung zur Förderrichtung der wiederaufzuarbeitenden Matrizen in der Behandlungsstrecke. Die Transferstraße für das bahnförmige Material und die Behandlungsstrecke für die Wiederaufarbeitung der Matrizen sind benachbart zueinander angeordnet, beispielsweise parallel zueinander angeordnet und durch die beiden erwähnten Handhabungssysteme einerseits zu Zufuhr und andererseits zu Abtransport der Matrizen miteinander verbunden, so dass in der erfindungsgemäß vorgeschlagenen Produktionsanlage und zur Herstellung mehrschichtiger Verbundkörper in Bezug auf die Matrizen ein Kreislauf implementiert ist.

In Weiterbildung der erfindungsgemäß vorgeschlagenen Produktionsanlage, insbesondere der Transferstraße, umfasst diese eine Abwickelstation für bahnförmiges Material sowie eine Aufwickelstation, die einer Aufgabestation für ein Klebermaterial zugeordnet sein kann. Auf der Produktionsanlage, insbesondere auf der Transferstraße der Produktionsanlage, kann bahnförmiges Trägermaterial bearbeitet werden, welches entweder durch ein mit Sprühkleber versehenes Trägermaterial gegeben ist, oder durch ein Trägermaterial gegeben ist, das mit einem Netzkleber versehen wird, oder welches als ein Trägermaterial ausgebildet ist, welches bereits mit einem wärmeaktivierbaren Kleber beschichtet ist. Zur Beschichtung von nicht mit Klebematerial versehenem bahnförmigem Material kann der Abwickelstation der Transferstraße eine Aufsprühstation für ein Klebematerial und eine nachgeschaltete Trocknereinheit zugeordnet sein.

In einer vorteilhaften Ausgestaltung der erfindungsgemäß vorgeschlagenen Produktionsanlage kann der Aufwickelstation des fertig behandelten bahnförmigen Trägermaterials eine Zuführung für eine Zwischenlage zugeordnet sein. Eine Zwischenlage, welche die frisch behandelte Oberseite des bahnförmigen Trägermaterials beim Aufwickeln auf einen Rollenkern voneinander trennt, kann insbesondere dann erforderlich sein, wenn es sich um empfindliche Soft-Touch-Strukturen handelt, die im aufgewickelten Zustand aufgrund des zunehmenden Gewichtes der Rolle Schaden nehmen könnten, eine Dämpfung der einzeln gewickelten Schichten in Bezug aufeinander und damit einen Schutz gegen Beschädigung bietet.

Die Transferstraße der erfindungsgemäß vorgeschlagenen Produktionsanlage umfasst die Entnahmestelle für die Matrizen, vorzugsweise angeordnet hinter der Kühleinrichtung sowie die Aufgabestation für wiederaufgearbeitete Matrizen, die der beheizbaren Presseinrichtung, sei es eine Rollenpresse, sei es eine Flachbettkaschieranlage, vorgeschaltet ist.

Anhand der Zeichnung wird die Erfindung nachstehend eingehender beschrieben.

Es zeigt:
- Figur 1: ein Herstellverfahren für mehrschichtige Verbundkörper gemäß des Standes der Technik mit manuell durchzuführenden Arbeitsschritten und
- Figur 2: eine schematische Darstellung der erfindungsgemäß vorgeschlagenen Produktionsanlage, bei der auf einer Transferstraße ein bahnförmiges Material in eine Förderrichtung transportiert wird und auf einer zu dieser parallel angeordneten Behandlungsstrecke eine Wiederaufarbeitung von Matrizen in gegenläufiger Richtung erfolgt.

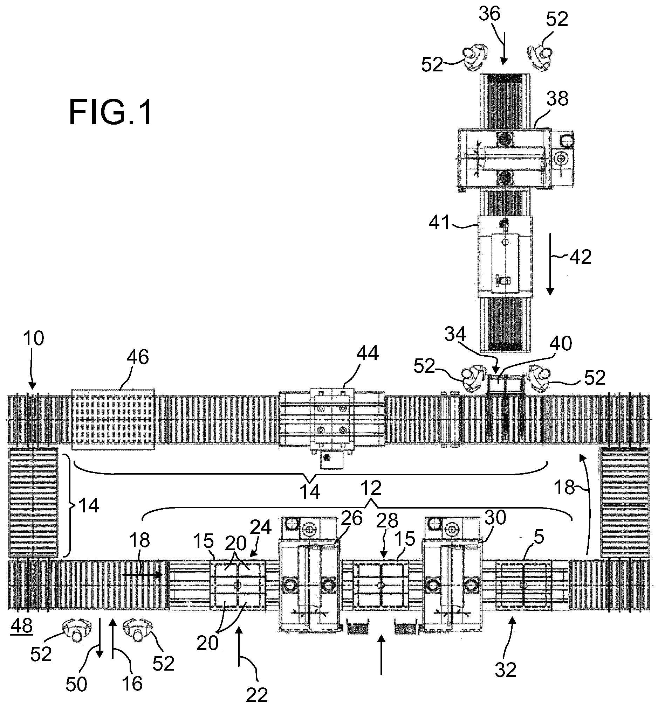

Der Darstellung gemäß Figur 1 ist ein Herstellungsprozess für mehrschichtige Verbundkörper in schematischer Weise zu entnehmen, bei dem noch eine Vielzahl manuell vorzunehmender Eingriffe erforderlich sind.

In Figur 1 ist ein Umlauf 10 dargestellt, auf dem innerhalb eines ersten Umlaufabschnittes 12 Matrizen 15 in Förderrichtung 18 gefördert werden und auf einem zweiten Umlaufabschnitt 14 ein Verbund-ebenfalls in Förderrichtung 18 - transportiert wird, der eine Matrize 15 und ein Trägermaterial 40 umfasst.

Gemäß Figur 1 wird eine Matrize 15 an einer Aufgabe 16 dem ersten Umlaufabschnitt 12 zugeführt. Bei der Matrize 15 handelt es sich um eine Silikonmatrize oder dergleichen, die eine äußere Abmessung von 1,2 m x 1,2 m bis 1,6 m x 1,6 m aufweisen kann. In dieser Matrize 15 wird mindestens eine Polyurethanschicht ausgeformt. Zu Beginn der Behandlung im ersten Umlaufabschnitt 12 für Matrizen 15 erfolgt an einem Startpunkt 22 als erster Behandlungsschritt die Behandlung der Matrize 15 in einer ersten Heizstation 24. Die erste Heizstation 24 kann einen oder mehrere Infrarotstrahler umfassen sowie mehrere Heizzonen. Zur Erwärmung der Matrize 15 können auch andere Wärmequellen in der ersten Heizstation 24 verbaut sein. Nach der Passage der ersten Heizstation 24 läuft die erwärmte vorgeheizte Matrize 15 in eine erste Beschichtungsstation 26 ein. In dieser wird ein Polyurethannebel oder eine Polyurethanschicht auf die vorgeheizte Matrize 15 aufgebracht. Durch schlagartiges Verdampfen von Wassertröpfchen beim Auftreffen des Polyurethannebels auf die heiße Oberfläche 78 der Matrize 15 entsteht deren Struktur. Sobald die Matrize 15 die erste Beschichtungsstation 26 verlassen hat, wird die in der ersten Beschichtungsstation 26 behandelte Matrize 15 einer Zwischentrocknung 28 zugeführt. Die Zwischentrocknung 28 kann ebenfalls ein oder mehrere Infrarotstrahler aufweisen sowie mehrere Heizzonen, um eine in der ersten Beschichtungsstation 26 beispielsweise aufgebrachte Polyurethanschicht zu trocknen; daneben besteht die Möglichkeit, im Rahmen der Zwischentrocknung 28 auch andere Wärmequellen außer Infrarotstrahlern einzusetzen. Nach Passage der Zwischentrocknung 28 läuft die Matrize 15 in eine weitere, zweite Beschichtungsstation 30 ein. Hier erfolgt eine erneute Beschichtung der Matrize 15 mit einer weiteren Polyurethanschicht. An die zweite Beschichtungsstation 30 schließt sich eine weitere Zwischentrocknung 32 an. Nach der weiteren Zwischentrocknung 32 in Förderrichtung 18 verlassen fertig behandelte Matrizen 15 den ersten Umlaufabschnitt 12 des Umlaufes 10 und werden dem zweiten Umlaufabschnitt 14 zugeführt.

Die fertig behandelten Matrizen 15, die den ersten Umlaufabschnitt 12 verlassen, werden einer Zusammenführung 34 zugeführt. An der Zusammenführung 34 entsteht ein Verbund aus einer fertig behandelten Matrize 15, die den ersten Umlaufabschnitt 12 in Förderrichtung 18 gesehen verlassen hat und einem Trägermaterial 40.

An einer Trägermaterialaufgabe 36 wird über Bedienpersonen 52 das Trägermaterial 40, welches vorkonfektioniert in diskreten Abmessungen, die zu den Abmessungen der Matrizen 15 korrespondieren, einer Aufgabestation 38 zugeführt, in der ein Klebstoff, der beispielsweise durch Wärmeeinwirkung aktiviert wird, auf das Trägermaterial 40 aufgebracht wird. Nach Aufbringen des Klebstoffes in der Aufgabestation 38 wird das nunmehr mit einer Schicht aus Klebstoff 38 versehene Trägermaterial 40 einem Trockner zugeführt. Im Trockner 41 erfolgt das Vortrocknen des Klebstoffes. Das Trägermaterial 40 wird in Förderrichtung 42 weitergefördert und durch weitere Bedienpersonen 52 auf eine fertig behandelte Matrize 15 aufgebracht, welche den ersten Umlaufabschnitt 12 verlässt. An der Zusammenführung 34 erfolgt mithin das manuelle Auflegen des mit einer vorgetrockneten Klebstoffschicht 38 versehenen Trägermaterials 40 mit der fertig behandelten, mit mindestens einer Polyurethanschicht versehenen Matrize 15.

Der Verbund aus Trägermaterial 40 und Matrize 15 wird in Förderrichtung 18 einer Pressstation 44 zugeführt. Bei der Pressstation 44 handelt es sich beispielsweise um eine hydraulische Presse. Diese kann höchstens zwei Verbünde, jeweils eine Matrize 15 und einen Trägermaterialabschnitt 40 umfassend, behandeln und stellt daher die die Fördergeschwindigkeit limitierende Komponente im zweiten Umlaufabschnitt 14 dar. Die Aufenthaltszeit zum Transfer der mindestens einen Polyurethanschicht, die in der Matrize 15 ausgeformt ist, auf das Trägermaterial 40, welches durch die Schicht mit Klebstoff 38 vorbehandelt ist, beträgt mindestens 30 s.

Nach Ablauf dieser Zeitspanne wird der Verbund aus Trägermaterial 40 und Matrize 15 einem Kühlabschnitt 46 zugeführt. Nach Passage des Kühlabschnittes 46 ist ein Endpunkt 48 des zweiten Umlaufabschnittes 14 für den Verbund aus Matrize 15 und Trägermaterial 40 erreicht. Am Endpunkt 48 des zweiten Umlaufabschnittes 14 erfolgt eine manuelle Entnahme 50 des Verbundes, d.h. der Matrize 15 und des fertig behandelten Trägermaterials 40 aus dem Umlauf 10. Die Entnahme erfolgt ebenfalls durch Bedienpersonen 52. Im Rahmen der manuellen Entnahme 50 am Endpunkt 48 des zweiten Umlaufabschnittes 14 wird die zuvor benutzte Matrize 15 einerseits entnommen, andererseits erfolgt am Endpunkt 48 die manuelle Entnahme 50 des fertig behandelten Trägermaterials 40. Dieses wird nun als Einzelmaterialstück einer Weiterverarbeitung einem Weitertransport oder einer Zwischenlagerung zugeführt. Da durch die Bedienpersonen 52 relativ große dünne flexible flächige Stücke in der Größenordnung von 1,20 m x 1,20 m bis 1,60 m x 1,60 m zu handhaben sind, besteht ein erhebliches Risiko, dass die fertig beschichteten Sichtseiten des Trägermaterials 40 beschädigt werden können. Des Weiteren werden im Rahmen der manuellen Entnahme 50 am Endpunkt 48 auch die Matrizen 15 entnommen. Diese können nach einer Kontrolle auf Wiederverwendung und Wiederbenutzung oder einer anderweitigen Wiederaufbereitung dem Startpunkt 22 für den ersten Umlaufabschnitt 12 für die Matrizen 15 wieder zugeführt werden. Alternativ können diese Matrizen 15 gegenüber solchen Matrizen 15 mit anderem Design, d.h. einer anders strukturierten Oberfläche 78 hier ausgetauscht und dem Startpunkt 22 zugeführt werden.

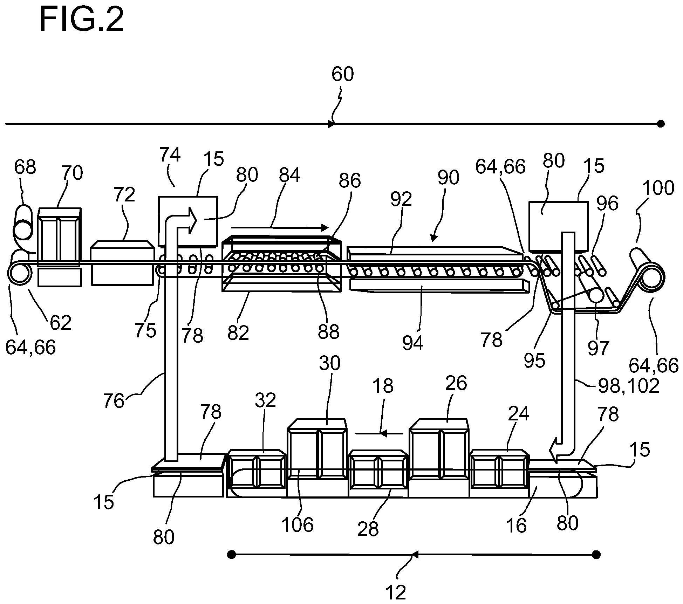

Anhand von Figur 2 wird das erfindungsgemäß vorgeschlagene Verfahren zur kontinuierlichen Herstellung von mehrschichtigen Verbundkörpern sowie in schematischer Weise eine dafür geeignete Produktionsanlage 10 eingehender beschrieben.

Figur 2 zeigt, dass einer Transferstraße 60 der erfindungsgemäß vorgeschlagenen Produktionsanlage zur Durchführung des erfindungsgemäßen Verfahrens zur kontinuierlichen Herstellung von mehrschichtigen Verbundkörpern an einer Entnahmeposition 96 Matrizen 15 entnommen werden. Die Matrizen werden im Rahmen eines Abtransportes 98, der nach dem erfindungsgemäßen Verfahren bevorzugt über automatisierte Handhabungseinrichtungen, wie beispielsweise Roboter oder Roboterarme erfolgt, der Aufgabe 16 für die Matrizen 15 des ersten Umlaufabschnittes 12 zugeführt. Im Rahmen des ersten Umlaufabschnittes 12 werden die der Aufgabe 16 zugeführten Matrizen 15 derart positioniert, dass die zu behandelnde strukturierte Seite 78 der Matrizen 15 von der Oberseite der Matrizen 15 her zugänglich ist. Die Matrizen 15 werden der ersten Heizstation 24 zugeführt, innerhalb der die zugeführten Matrizen 15 über Wärmequellen, wie beispielsweise Infrarotstrahler, erwärmt werden. Die Erwärmung innerhalb der ersten Heizstation 24 kann von beiden Seiten der Matrize her erfolgen, d.h. die Wärmequellen können auf der strukturierten Seite 78 und auch auf der nicht-strukturierten Seite 80 angeordnet sein. Nach Passage der ersten Heizstation 24 werden die erwärmten Matrizen 15 der ersten Beschichtungsstation 26 zugeführt. In der ersten Beschichtungsstation 26 erfolgt das Aufbringen mindestens einer Polyurethanschicht auf die Matrize 15 analog wie in Zusammenhang mit der Darstellung gemäß Figur 1 bereits beschrieben. Nach Passage der ersten Beschichtungsstation 26 werden die vorbehandelten Matrizen in Förderrichtung 18 mittels eines Förderbandes 106 im ersten Umlaufabschnitt 12 weitertransportiert, bis die Matrizen 15 die Zwischentrocknung 28 erreichen. In der Zwischentrocknung 28 erfolgt eine Trocknung der in der ersten Beschichtungsstation 26 beschichteten Matrizen 15. Nach der Zwischentrocknung 28 werden die Matrizen der zweiten Beschichtungsstation 30 zugeführt. Hier erfolgt eine erneute Beschichtung der Matrize 15 mit einer weiteren Polyurethanschicht und der anschließende Weitertransport der Matrize 15 in Förderrichtung 18 zur Zwischentrocknung 32. Nach Verlassen der Zwischentrocknung 32 ist der Umlaufabschnitt 12 beendet.

Am Ende des ersten Umlaufabschnittes 12 liegen Matrizen 15 vor, die die nicht-strukturierte Seite 80, d.h. eine Unterseite aufweisen und die auf ihrer strukturierten Seite 78, d.h. der frei zugänglichen Oberseite der Matrize 15 fertig behandelt, d.h. mit einem ein- oder mehrschichtigen Schichtaufbau aus Polyurethanschichten versehen sind. Die fertig behandelten Matrizen 15 werden dem ersten Umlaufabschnitt 12 gemäß Figur 2 über ein Handhabungssystem, wie zum Beispiel ein automatisiertes Handhabungssystem, wie beispielsweise ein Roboterarm oder dergleichen entnommen und einer Aufgabestelle 74 der Transferstraße 60 der Produktionsanlage zugeführt.

Wie der Figur 2 entnommen werden kann, wird ein bahnförmiges Trägermaterial 64 der Transferstraße 60 an einer Abwickelstation 62 zugeführt. Die Zufuhr des bahnförmigen Trägermaterials 64 zur Transferstraße 60 erfolgt kontinuierlich als durchlaufender Prozess. Bei dem bahnförmigen Trägermaterial 64 kann es sich beispielsweise um ein bereits mit einem Sprühkleber versehenes Trägermaterial 64 handeln, oder um ein bahnförmiges Trägermaterial 64, welches mit einem Netzkleber an einer Zulaufstation 68 diesem zugeführt wird. Bei dem bahnförmigen Trägermaterial kann es sich auch um ein solches Trägermaterial handeln, welches bereits mit Wärme aktivierbarem Kleber versehen ist, d.h. um ein bahnförmiges Trägermaterial 66, welches nicht mehr mit einem Kleber bzw. einer Klebschicht zu versehen ist. Das bahnförmige Trägermaterial 64, 66 läuft von der Aufwickelstation einer Beschichtungsstation 70 zu, an welcher gegebenenfalls an einer Beschichtungsstation 70 (Sprühkabine) ein Flüssigkleber, ein Hot Melt oder ein Pulverkleber ggf. auf die Sichtseite des bahnförmigen Trägermaterials 64 aufgebracht wird. Nach Durchlauf der Beschichtungsstation 70 der Transferstraße 60 läuft das derart vorbehandelte bahnförmige Trägermaterial 64, 66, welches die Transferstraße 60 in Förderrichtung 84 durchläuft, in einen Trockner 72 ein. Im Trockner 72 wird das bahnförmige Trägermaterial 64, 66 erwärmt, so dass ein gegebenenfalls in der Beschichtungsstation 70 aufgebrachter Kleber vorgetrocknet oder ein wärmeaktivierbarer Kleber, der sich auf dem bahnförmigen Trägermaterial 66 befindet, aktiviert wird, bevor das bahnförmige Trägermaterial 64, 66 die Aufgabestelle 74 erreicht.

An der Aufgabestelle 74 wird dem bahnförmigen Trägermaterial 64, 66 die über das automatisierte Handhabungssystem vom ersten Umlaufabschnitt 12 entnommene, dort fertig behandelte Matrize 15 zugeführt. Die fertig behandelte Matrize 15 wird an der Aufgabestelle 74 mit ihrer strukturierten Seite 78 dem bahnförmigen Trägermaterial 64 zuweisend, auf dessen Sichtseite aufgebracht. Aufgrund der Förderung des bahnförmigen Trägermaterials 64, 66 in kontinuierlicher Weise in Förderrichtung 84, wird zur Vermeidung von Relativbewegungen zwischen der strukturierten Seite 78 der Matrize 15 und der Sichtseite des bahnförmigen Trägermaterials 64, 66 gegebenenfalls die auf die Sichtseite des bahnförmigen Trägermaterials 64, 66 aufzubringende Matrize entsprechend der Fördergeschwindigkeit des bahnförmigen Trägermaterials 64, 66 diesem mitbewegt, so dass ein relativgeschwindigkeitsfreies Aufbringen der Matrize 15 auf das bahnförmige Trägermaterial 64, 66 erfolgt. Zur Vermeidung von Relativbewegungen zwischen der strukturierten Seite 78 der Matrize 15 und der Schichtseite des bahnförmigen Trägermaterials 64, 66 kann ein unterstützendes Transportband 75 synchron zu dem bahnförmigen Trägermaterial 64, 66 bewegt werden. Zur Minimierung der Rapporte werden die Matrizen 15 beispielsweise sensorgesteuert mit sehr kleinen Abständen zur jeweils vorhergehenden Matrize 15 aufgelegt.

Von der Aufgabestelle 74 aus, wird der nunmehr vorliegende Verbund aus einem Abschnitt des bahnförmigen Trägermaterials 64, 66 und auf dessen Sichtseite aufliegenden strukturierten Seite 78 der Matrize 15 einer beheizbaren Presseinrichtung 82 zugeführt. Bei der beheizbaren Presseinrichtung 82 kann es sich beispielsweise um eine Rollenpresse oder auch um eine Flachpresse oder um eine Flachbettkaschiermaschine handeln. Die beheizbare Presseinrichtung 82 umfasst-wie schematisch in Figur 2 dargestellt - eine erste Walzenanordnung 86 sowie eine zweite Walzenanordnung 88. Zwischen den beiden Walzenanordnungen 86, 88 wird der Verbund aus Matrize 15 und bahnförmigem Trägermaterial 64, 66 in Förderrichtung 84 transportiert, so dass der Verbund durch die temperierbaren Walzen der Walzenanordnung 86, 88 von der Oberseite und der Unterseite her temperiert werden kann. Bei der Temperierung des Verbundes aus Matrize 15 und bahnförmigem Trägermaterial 64, 66 geht mindestens eine in der Matrize 15 ausgeformte Polyurethanschicht auf die Sichtseite des bahnförmigen Trägermaterials 64, 66 über und bildet auf diesem eine entsprechend der Lasergravur der Matrize vordefinierte Prägung, Strukturierung der Richtseite des bahnförmigen Trägermaterials 64, 66 aus.

Nach dem Transfer der mindestens einen Polyurethanschicht von der Matrize 15 auf die Sichtseite des bahnförmigen Trägermaterials 64, 66 bei Passage der beheizbaren Presseinrichtung 82 tritt der Verbund aus bahnförmigem Trägermaterial 64, 66 und der Matrize 15 in eine sich in Förderrichtung 84 des bahnförmigen Trägermaterials 64, 66 erstreckende Kühleinrichtung 90 ein. Die Kühleinrichtung 90 kann ein Oberteil 92 und ein Unterteil 94 umfassen, sowie eine Vielzahl von in Figur 2 schematisch dargestellten kühlbaren Walzen, über welche dem Verbund aus Matrize 15 und bahnförmigem Trägermaterial 64, 66, die in der beheizbaren Presseinrichtung 82 zugeführte Wärme wieder entzogen werden kann. Bei der Kühleinrichtung 90 können in deren Oberteil 92 bzw. in deren Unterteil 94 Kühlgebläse vorgesehen sein, über welche der Verbund aus Matrize 15 und dem bahnförmigen Trägermaterial 64, 66 abgekühlt werden kann. Somit werden in der beheizbaren Presseinrichtung 82 auf Temperaturen zwischen 110 und 130°C jeweils aufgeheizten Verbunde aus Matrize 15 und bahnförmigem Trägermaterial 64, 66 wieder auf eine Temperatur unterhalb von 50°C abgekühlt.

Nach der Passage der Kühleinrichtung 90 werden an der Matrizenabnahmestelle 96 die Matrizen mit ihrer strukturierten Unterseite 78 von der Sichtseite des bahnförmigen Trägermaterials 64, 66 abgenommen. Die Sichtseite des bahnförmigen Trägermaterials 64, 66 umfasst nunmehr den durch die Matrize 15 übertragenen Verbund aus mindestens einer, bevorzugt mehrerer Polyurethanschichten, die auf die Sichtseite des bahnförmigen Trägermaterials 64, 66 übergegangen sind.

Die an der Entnahmestelle 96 aus der Transferstraße 60 entnommenen Matrizen 15 werden im Rahmen eines Abtransportes 98 über eine automatisierte Handhabungseinrichtung, wie beispielsweise einen Roboterarm oder dergleichen der Aufgabestelle 16 des ersten Umlaufabschnittes 12 zur Wiederaufbereitung der Matrizen 15 zugeführt. Während des Abtransportes 98 der Matrizen 15 von der Entnahmestelle 96 zur Aufgabestelle 16 werden die Matrizen 15 derart gewendet, dass die Matrizen 15 an der Aufgabestelle 16 des ersten Behandlungsabschnittes 12 mit ihrer strukturierten Seite 78 nach oben weisen und demzufolge direkt einer Wiederaufarbeitung im Rahmen des ersten Umlaufabschnittes 12 wieder zugeführt werden können. Die nicht-strukturierte Unterseite 80 liegt bevorzugt auf dem Förderband 106 des ersten Umlaufabschnittes 12 sowie der Wiederaufarbeitung der Matrizen 15 auf, so dass die Matrizen 15 kontinuierlich durch den ersten Umlaufabschnitt 12 transportiert werden können.

Nach Abnahme der Matrizen 15 an der Entnahmestelle 96 durch die automatisierte Handhabungseinrichtung im Rahmen des Abtransportes 98 und einer Matrizenwendung 102 wird das fertig behandelte bahnförmige Trägermaterial 64, 66 an einer Aufwickelstation 100, die Teil der Transferstraße 60 der erfindungsgemäß vorgeschlagenen Produktionsanlage ist, aufgerollt. Durch Abtrennen des bahnförmigen Trägermaterials 64, 66 einschließlich des durch die Matrize 15 übertragenen Verbundes nach unten über eine Abzugswalze 95, wird die Matrize 15 delaminiert und kann somit die Handhabungseinrichtung 98 mit der Matrizenwendung 102 wieder der Aufgabestelle für die Matrize 15 zugeführt werden. Das bahnförmig fertig behandelte Trägermaterial 64, 66 liegt nunmehr in der Aufwickelstation 100 als leicht handhabbare Rollenware vor. Bevorzugt sind auf der Sichtseite des bahnförmigen Trägermaterials 64, 66 die einzelnen fertig behandelten Abschnitte entweder einander anstoßend oder unter Ausbildung geringer Rapporte von wenigen Millimetern hintereinander angeordnet. Bei besonders beschädigungsempfindlichen Materialien, so zum Beispiel velvetartigem Soft-Touch-Finish und dergleichen, kann eine Beschädigung der fertig behandelten Sichtseiten des bahnförmgien Trägermaterials 64, 66 durch Einbringen einer Zwischenlage 97 während des Aufwickelvorganges in der Aufwickelstation 100 verhindert werden.

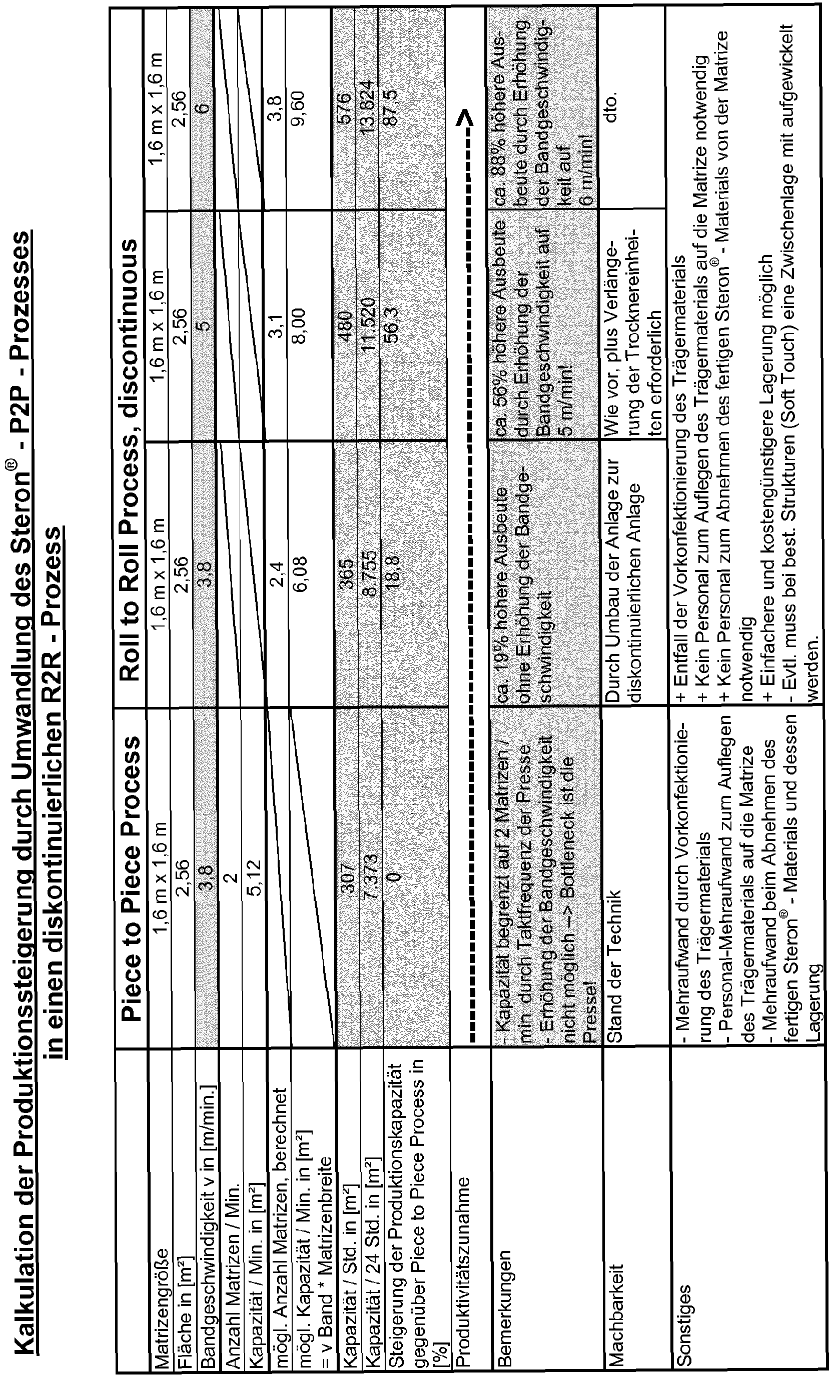

### Bezugszeichenliste

- 10: Umlaufverbund Matrize / Trägermaterial
- 12: Behandlungsstrecke Matrize
- 14: Behandlungsstrecke Verbund
- 15: Matrize
- 16: Aufgabestelle der Matrize
- 18: Förderrichtung der Matrize
- 20: Heizfelder erste Heizstation
- 22: Startpunkt
- 24: erste Heizstation (Infrarot)
- 26: erste Beschichtungsstation
- 28: Zwischentrocknung (Infrarot)
- 30: zweite Beschichtungsstation
- 32: weitere Zwischentrocknung (Infrarot)
- 34: Zusammenführung Verbund aus Matrize / Trägermaterial
- 36: Trägermaterialaufgabe
- 38: Aufgabestation Klebstoff
- 40: bahnförmiges Trägermaterial
- 41: Trockner für bahnförmiges Trägermaterial
- 42: Förderrichtung bahnförmiges Trägermaterial
- 44: Pressstation (hydraulisch)
- 46: Kühlabschnitt
- 48: Endpunkt des Umlaufes des Verbundes
- 50: manuelle Entnahme des Verbundes
- 52: Bediener
- 54:
- 56:
- 58:
- 60: Transferstraße
- 62: Abwickelstation bahnförmiges Trägermaterial
- 64: bahnförmiges Trägermaterial
- 66: bahnförmiges Trägermaterial mit wärmeaktivierbarem Kleber
- 68: Zufuhr Netzkleber / Sprühkleber
- 70: Beschichtungsstation
- 72: Trockner
- 74: Aufgabestelle der Matrize
- 75: Antrieb Transportband
- 76: Zufuhr der Matrize / automatisierte Handhabungseinrichtung
- 78: strukturierte Seite der Matrize
- 80: nicht-strukturierte Seite der Matrize
- 82: beheizbare Presseinrichtung (Rollenpresse, Flachpresse, Flachbettkaschieranlage)
- 84: Förderrichtung bahnförmiges Material
- 86: erste temperierbare Walzenanordnung
- 88: zweite temperierbare Walzenanordnung
- 90: Kühleinrichtung
- 92: Oberteil
- 94: Unterteil
- 95: Abzugswalze für bahnförmiges Trägermaterial 64, 66
- 96: Matrizenabnahmestelle
- 97: Abwickelstation für Zwischenlage
- 98: Abtransport Matrize durch automatisierte Handhabungseinichtung
- 100: Aufwickelstation bahnförmiges Trägermaterial (Rollenware)
- 102: Matrizenwendung (180°-Wendung)
- 104: Förderrichtung Matrize
- 106: Förderband

## Patentansprüche

1. Verfahren zur kontinuierlichen Herstellung von mehrschichtigen Verbundkörpern umfassend:
- Mindestens ein Trägermaterial (64, 66),
- mindestens eine Verbindungsschicht,
- mindestens eine Polyurethanschicht, die Kapillaren aufweist, die sich durch die gesamte Dicke der Polyurethanschicht erstrecken,
mit nachfolgenden Verfahrensschritten:
a) Herstellung der mindestens einen Polyurethanschicht in einer Matrize (15), mit Durchlauf durch mindestens eine Beschichtungsstation (26, 30) und mehrerer Heizstationen (24, 28, 32),
b) automatisierte Zufuhr (76) der Matrize (15) gemäß Verfahrensschritt a) zur Aufgabestelle (74) an einer Transferstraße (60) für bahnförmiges Trägermaterial (64, 66),
c) Aufbringen einer strukturierten Seite (78) der Matrize (15) auf das die Transferstraße (60) kontinuierlich durchlaufende bahnförmige Trägermaterial (64, 66),
d) Behandlung eines Verbundes aus Matrize (15) und bahnförmigem Trägermaterial (64, 66) in einer beheizbaren Presseinrichtung (82) mit Übertrag der mindestens einen Polyurethanschicht auf das bahnförmige Trägermaterial (64, 66),
e) Entnahme der Matrize (15) für bahnförmiges Trägermaterial (64, 66),
f) Überführung der Matrize (15) zu einer Behandlungsstrecke (12) und
g) kontinuierliches Aufwickeln des bahnförmigen Trägermaterials (64, 66) an einer Aufwickelstation (100).

2. Verfahren gemäß Anspruch 1, **dadurch gekennzeichnet, dass** die Durchführung des Verfahrensschrittes a) innerhalb der Behandlungsstrecke (12) gegenläufig zur Förderrichtung (84) des Trägermaterials (64, 66) in der Transferstraße (60) erfolgt.

3. Verfahren gemäß einem der vorhergehenden Ansprüche, **dadurch gekennzeichnet, dass** die die mindestens eine Polyurethanschicht ausformende Matrize (15) während der Durchführung des Verfahrensschrittes a) von einer Entnahmeposition (96) zu ihrer Aufgabeposition (74) zurücktransportiert wird.

4. Verfahren gemäß einem der vorhergehenden Ansprüche, **dadurch gekennzeichnet, dass** zwischen der Transferstraße (60) und der Behandlungsstrecke (12) für die Matrize (15) eine automatisierte Zufuhr (76) und ein automatisierter Abtransport (98) der Matrize (15) erfolgt.

5. Verfahren gemäß dem vorhergehenden Anspruch, **dadurch gekennzeichnet, dass** die Matrize (15) während des Abtransportes (98) von der Transferstraße (60) zur Behandlungsstrecke (12) gewendet wird und die Behandlungsstrecke (12) mit von oben zugänglicher strukturierter Seite (78) erreicht.

6. Verfahren gemäß einem der vorhergehenden Ansprüche, **dadurch gekennzeichnet, dass** in der Transferstraße (60) bahnförmiges Trägermaterial (64, 66) als Rollenware in Förderrichtung (84) zu einer Aufwickelstation (100) gefördert wird.

7. Verfahren gemäß einem der vorhergehenden Ansprüche, **dadurch gekennzeichnet, dass** als bahnförmiges Trägermaterial (64, 66) ein
- mit Sprühkleber versehenes bahnförmiges Trägermaterial (64, 66) oder
- ein bahnförmiges Trägermaterial (64, 66), welches mit einem Netzkleber (68) versehen wird, oder
- ein bereits mit einem wärmeaktivierbaren Kleber beschichtetes bahnförmiges Trägermaterial (68)
eingesetzt wird.

8. Verfahren gemäß einem oder mehrerer der vorhergehenden Ansprüche, **dadurch gekennzeichnet, dass** die in der Behandlungsstrecke (12) behandelte Matrize (15) über eine automatisierte Handhabungseinrichtung mit ihrer strukturierten Seite (78) auf das in Förderrichtung (84) geförderte bahnförmige Material (64, 66) aufgelegt wird.

9. Verfahren gemäß einem der vorhergehenden Ansprüche, **dadurch gekennzeichnet, dass** bei Passage einer beheizbaren Presseinrichtung (82) ein Verbund aus der Matrize (15) und dem bahnförmigen Trägermaterial (64, 66) mindestens eine in der Matrize (15) enthaltene Polyurethanschicht auf das bahnförmige Trägermaterial (64, 66) transferiert wird.

10. Verfahren gemäß einem der vorhergehenden Ansprüche, **dadurch gekennzeichnet, dass** nach Passage einer Kühleinrichtung (90) der Transferstraße (60) fertig behandeltes bahnförmiges Trägermaterial (64, 66) in eine Aufwickelstation (100) aufgewickelt wird.

11. Verfahren gemäß einem der vorhergehenden Ansprüche, **dadurch gekennzeichnet, dass** nach Entnahme der Matrize (15) hinter einer Kühleinrichtung (90) diese erneut der Behandlungsstrecke (12) zur Wiederaufarbeitung zugeführt wird und während ihres Abtransportes (98) gewendet wird.

12. Verfahren gemäß einem der vorhergehenden Ansprüche, **dadurch gekennzeichnet, dass** während des kontinuierlichen Aufwickelns des bahnförmigen Trägermaterials (64, 66) an eine Aufwickelstation (100) gemäß Verfahrensschritt g) ein Einwickeln einer Zwischenlage zum Schutz empfindlicher Strukturen erfolgt.

13. Produktionsanlage zur Durchführung des Verfahrens zur Herstellung mehrschichtiger Verbundkörper gemäß einem der Ansprüche 1 bis 12, mit nachfolgenden Komponenten:
- Einer Transferstraße (60) zur Behandlung bahnförmigen Trägermaterials (64, 66) mit einer beheizbaren Presseinrichtung (82),
- einer Entnahmeposition (96) für auf das bahnförmige Trägermaterial (64, 66) einwirkende Matrizen (15),
- einem automatisierten Abtransport (98) der Matrizen (15) und deren Zufuhr zu einer Behandlungsstrecke (12) für die Wiederaufarbeitung der Matrizen (15),
- eine Wiederaufarbeitung der Matrizen (15) in der Behandlungsstrecke (12) und
- einer automatisierten Zufuhr (76) der Matrizen (15) von der Behandlungsstrecke (12) zur Transferstraße (60) und Aufgabe/Zufuhr (76) der Matrizen (15) auf das in Förderrichtung (84) kontinuierlich geförderte bahnförmige Trägermaterial (64, 66).

14. Produktionsanlage gemäß Anspruch 13, **dadurch gekennzeichnet, dass** die beheizbare Presseinrichtung (82) eine Rollenpresse oder eine Flachbettkaschieranlage ist und temperierbare Walzenanordnungen (86, 88) und/oder IR-Strahler und/oder Heißluftgebläse umfasst.

15. Produktionsanlage gemäß Anspruch 13, **dadurch gekennzeichnet, dass** die beheizbare Presseinrichtung (82) temperierbare Walzen (86, 88) aufweist, zwischen denen ein Verbund aus bahnförmigem Trägermaterial (64, 66) und der Matrize (15) in Förderrichtung (84) gefördert wird.

16. Produktionsanlage gemäß Anspruch 13, **dadurch gekennzeichnet, dass** die Zufuhr der behandelten Matrize (15) zur Transferstraße (60) durch eine automatisierte Handhabungseinrichtung, insbesondere einen Roboterarm erfolgt.

17. Produktionsanlage gemäß Anspruch 13, **dadurch gekennzeichnet, dass** der Abtransport (98) der Matrize (15) durch eine automatisierte Handhabungseinrichtung erfolgt, die die Matrize (15) wendet, derart, dass deren strukturierte Seite (78) bei Erreichen der Behandlungsstrecke (12) zugänglich ist.

18. Produktionsanlage gemäß Anspruch 13, **dadurch gekennzeichnet, dass** die Förderrichtung (84) des bahnförmigen Trägermaterials (64, 66) durch die Transferstraße (60) entgegengesetzt zur Förderrichtung (104) der Matrizen (15) durch die Behandlungsstrecke (12) gerichtet ist.

19. Produktionsanlage gemäß Anspruch 13, **dadurch gekennzeichnet, dass** die Transferstraße (60) eine Abwickelstation (62) für bahnförmiges Trägermaterial (64, 66) aufweist.

20. Produktionsanlage gemäß dem vorherigen Anspruch, **dadurch gekennzeichnet, dass** der Abwickelstation (62) für das bahnförmige Trägermaterial (64, 66) eine Aufgabestation (68) für Klebematerial, Sprühkleber oder Netzkleber zugeordnet ist.

21. Produktionsanlage gemäß Anspruch 13, **dadurch gekennzeichnet, dass** die Transferstraße (60) eine Aufwickelstation (100) für bahnförmiges Trägermaterial (64, 66) aufweist.

22. Produktionsanlage gemäß einem der vorhergehenden Ansprüche, **dadurch gekennzeichnet, dass** die Aufwickelstation (100) eine Zuführung (95) für eine Zwischenlage (97) aufweist, die empfindliche Strukturen auf der Sichtseite des bahnförmigen Trägermaterials (64, 66) im aufgewickelten Zustand voneinander trennt.

23. Produktionsanlage gemäß Anspruch 13, **dadurch gekennzeichnet, dass** die Entnahmeposition (96) für die Matrize (15) vom bahnförmigen Trägermaterial (64, 66) hinter einer Kühleinrichtung (90) angeordnet ist.

24. Produktionsanlage gemäß Anspruch 13, **dadurch gekennzeichnet, dass** die Aufgabestelle (74) für die Matrize (15) auf das bahnförmige Trägermaterial (64, 66) in Förderrichtung (84) gesehen, vor der beheizbaren Presseinrichtung (82) liegt.

## Claims

1. A process for the continuous production of multilayer composites comprising:
- at least one substrate web (64, 66),
- at least one bonding layer,
- at least one polyurethane layer which has capillaries which extend through the entire thickness of the polyurethane layer,
with the following steps:
a) production of the at least one polyurethane layer in a matrix (15), with passage through at least one coating unit (26, 30) and a plurality of heating units (24, 28, 32),
b) automated introduction (76) of the matrix (15) according to step a) to the input point (74) at a transfer section (60) for substrate web (64, 66),
c) application of a structured side (78) of the matrix (15) to the substrate web (64, 66) passing continuously through the transfer section (60),
d) treatment of a composite made of matrix and of substrate web (64, 66) in a heatable press device (82) with transfer of the at least one polyurethane layer to the substrate web (64, 66),
e) removal of the matrix (15) for substrate web (64, 66),
f) transfer of the matrix (15) to a treatment section (12), and
g) continuous wind-up of the substrate web (64, 66) at a wind-up unit (100).

2. The process according to claim 1, wherein step a) is carried out within the treatment section (12) in opposition to the conveying direction (84) of the substrate web (64, 66) in the transfer section (60) .

3. The process according to any of the preceding claims, wherein, during the conduct of step a), the matrix (15) that shapes the at least one polyurethane layer is transported back from a removal position (96) to its input position (74).

4. The process according to any of the preceding claims, wherein automated introduction (76) and automated outward transport (98) of the matrix (15) takes place between the transfer section (60) and the treatment section (12) for the matrix (15).

5. The process according to the preceding claim, wherein, during the outward transport (98) from the transfer section (60) to the treatment section (12), the matrix (15) is turned, and reaches the treatment section (12) with structured side (78) accessible from above.

6. The process according to any of the preceding claims, wherein substrate web (64, 66) is conveyed as roll product in conveying direction (84) in the transfer section (60) to a wind-up unit (100).

7. The process according to any of the preceding claims, wherein substrate web (64, 66) used comprises
- a substrate web (64, 66) provided with spray adhesive or
- a substrate web (64, 66) which is provided with a network adhesive (68), or
- a substrate web (68) already coated with a heat-activatable adhesive.

8. The process according to one or more of the preceding claims, wherein the matrix (15) treated in the treatment section (12) is placed by way of an automated handling device with their structured side (78) onto the web (64, 66) conveyed in conveying direction (84).

9. The process according to any of the preceding claims, wherein during passage through a heatable press device (82), a composite made of the matrix (15) and of the substrate web (64, 66), at least one polyurethane layer comprised in the matrix (15) is transferred onto the substrate web (64, 66).

10. The process according to any of the preceding claims, wherein after passage through a cooling device (90) of the transfer section (60) fully treated substrate web (64, 66) is wound up into a wind-up unit (100).

11. The process according to any of the preceding claims, wherein after removal of the matrix (15) downstream of a cooling device (90) this is reintroduced into the treatment section (12) for retreatment and, during outward transport (98) thereof, is turned.

12. The process according to any of the preceding claims, wherein during the continuous wind-up of the substrate web (64, 66) at a wind-up unit (100) according to step g) an interlay for the protection of delicate structures is wound into the material.

13. A production plant for carrying out the process for the production of multilayer composites according to any of claims 1 to 12, with the following components:
- a transfer section (60) for the treatment of substrate web (64, 66) with a heatable press device (82),
- a removal position (96) for matrices (15) acting on the substrate web (64, 66),
- an automated outward transport system (98) for the matrices (15) and introduction of these into a treatment section (12) for the retreatment of the matrices (15),
- retreatment of the matrices (15) in the treatment section (12), and
- automated introduction (76) of the matrices (15) from the treatment section (12) into the transfer section (60), and input/introduction (76) of the matrices (15) onto the substrate web (64, 66) conveyed continuously in conveying direction (84).

14. The production plant according to claim 13, wherein the heatable press device (82) is a roller press or a flat-bed lamination system, and comprises temperature-controllable roll arrangements (86, 88) and/or IR sources, and/or hot-air blowers.

15. The production plant according to claim 13, wherein the heatable press device (82) has temperature-controllable rolls (86, 88) between which a composite made of substrate web (64, 66) and of the matrix (15) is conveyed in conveying direction (84) .

16. The production plant according to claim 13, wherein the introduction of the treated matrix (15) into the transfer section (60) takes place via an automated handling device, in particular a robot arm.

17. The production plant according to claim 13, wherein the outward transport (98) of the matrix (15) takes place via an automated handling device which turns the matrix (15) in such a way that the structured side (78) thereof is accessible when the treatment section (12) is reached.

18. The production plant according to claim 13, wherein the conveying direction (84) of the substrate web (64, 66) through the transfer section (60) is opposite for the conveying direction (104) of the matrices (15) through the treatment section (12).

19. The production plant according to claim 13, wherein the transfer section (60) has an unwind unit (62) for substrate web (64, 66).

20. The production plant according to the preceding claim, wherein the unwind unit (62) for the substrate web (64, 66) has an associated input unit (68) for adhesive material, spray adhesive, or network adhesive.

21. The production plant according to claim 13, wherein the transfer section (60) has a wind-up unit (100) for substrate web (64, 66).

22. The production plant according to any of the preceding claims, wherein the wind-up unit (100) has a feed (95) for an interlay (97) which, in the wound-up condition, separates delicate structures on the visible side of the substrate web (64, 66) from one another.

23. The production plant according to claim 13, wherein the removal position (96) for the matrix (15) from the substrate web (64, 66) is downstream of a cooling device (90).

24. The production plant according to claim 13, wherein the input point (74) for the matrix (15) onto the substrate web (64, 66) is, seen in conveying direction (84) upstream of the heatable press device (82).

## Revendications

1. Procédé pour la fabrication continue de corps composites multicouches, comprenant :
- au moins un matériau support (64, 66),
- au moins une couche de liaison,
- au moins une couche de polyuréthane qui présente des capillaires qui s'étendent à travers l'épaisseur totale de la couche de polyuréthane,
présentant les étapes de procédé suivantes :
a) préparation de ladite au moins une couche de polyuréthane dans au moins une matrice (15), avec passage à travers au moins un poste de revêtement (26, 30) et plusieurs postes de chauffage (24, 28, 32),
b) acheminement automatisé (76) de la matrice (15) selon l'étape de procédé a) vers le poste d'application (74) au niveau d'un train de transfert (60) pour matériau support (64, 66) sous forme de bande,
c) application d'une face structurée (78) de la matrice (15) sur le matériau support (64, 66) sous forme de bande traversant en continu le train de transfert (60),
d) traitement d'un composite constitué par la matrice (15) et le matériau support (64, 66) sous forme de bande dans un dispositif de pressage (82) pouvant être chauffé avec transfert de ladite au moins une couche de polyuréthane sur le matériau support (64, 66) sous forme de bande,
e) prélèvement de la matrice (15) pour le matériau support (64, 66) sous forme de bande,
f) transfert de la matrice (15) vers une zone de traitement (12) et
g) enroulement continu du matériau support (64, 66) sous forme de bande au niveau d'un poste d'enroulement (100).

2. Procédé selon la revendication 1, **caractérisé en ce que** la réalisation de l'étape de procédé a) a lieu dans la zone de traitement (12) en sens contraire au sens de transport (84) du matériau support (64, 66) dans le train de transfert (60).

3. Procédé selon l'une quelconque des revendications précédentes, **caractérisé en ce que** la matrice (15) formant ladite au moins une couche de polyuréthane est transportée en retour pendant la réalisation de l'étape de procédé a) d'une position de prélèvement (96) jusqu'à sa position d'application (74) .

4. Procédé selon l'une quelconque des revendications précédentes, **caractérisé en ce qu'**un acheminement automatisé (76) et une évacuation automatisée (98) de la matrice (15) ont lieu entre le train de transfert (60) et la zone de traitement (12) pour la matrice (15).

5. Procédé selon la revendication précédente, **caractérisé en ce que** la matrice (15) est tournée pendant l'évacuation (98) du train de transfert (60) vers la zone de traitement (12) et atteint la zone de traitement (12) avec la face structurée (78) accessible depuis le dessus.

6. Procédé selon l'une quelconque des revendications précédentes, **caractérisé en ce qu'**un matériau de transport (64, 66) sous forme de bande est transporté dans le train de transfert (60) sous forme de rouleau dans le sens du transport (84) vers un poste d'enroulement (100).

7. Procédé selon l'une quelconque des revendications précédentes, **caractérisé en ce qu'**on utilise, comme matériau support (64, 66) sous forme de bande,
- un matériau support (64, 66) sous forme de bande pourvu d'un adhésif pulvérisé ou
- un matériau support (64, 66), qui est pourvu d'un adhésif en filet (68) ou
- un matériau support (68) sous forme de bande déjà revêtu d'un adhésif thermoactivable.

8. Procédé selon l'une ou plusieurs des revendications précédentes, **caractérisé en ce que** la matrice (15) traitée dans la zone de traitement (12) est appliquée, via un dispositif de manipulation automatisé, avec sa face structurée (78) sur le matériau (64, 66) sous forme de bande transporté dans le sens du transport (84).

9. Procédé selon l'une quelconque des revendications précédentes, **caractérisé en ce que** lors du passage, dans un dispositif de pressage (82) pouvant être chauffé, un composite composé par la matrice (15) et le matériau support (64, 66) sous forme de bande, au moins une couche de polyuréthane contenue dans la matrice (15) est transférée sur le matériau support (64, 66) sous forme de bande.

10. Procédé selon l'une quelconque des revendications précédentes, **caractérisé en ce qu'**après le passage dans un dispositif de refroidissement (90) du train de transfert (60), le matériau support (64, 66) sous forme de bande traité fini est enroulé dans un poste d'enroulement (100).

11. Procédé selon l'une quelconque des revendications précédentes, **caractérisé en ce qu'**après le prélèvement de la matrice (15) en aval d'un dispositif de refroidissement (90), celle-ci est de nouveau acheminée vers la zone de traitement (12) pour un retraitement et est tournée pendant son évacuation (98) .

12. Procédé selon l'une quelconque des revendications précédentes, **caractérisé en ce que**, pendant l'enroulement continu du matériau support (64, 66) sous forme de bande au niveau d'un poste d'enroulement (100) selon l'étape de procédé g), un enroulement d'une couche intermédiaire pour la protection de structures sensibles est effectué.

13. Installation de production pour la réalisation du procédé de fabrication d'un corps composite multicouche selon l'une quelconque des revendications 1 à 12, présentant les composants suivants :
- un train de transfert (60) pour le traitement de matériau support (64, 66) sous forme de bande à l'aide d'un dispositif de pressage (82) pouvant être chauffé,
- une position de prélèvement (96) pour des matrices (15) agissant sur le matériau support (64, 66) sous forme de bande,
- une évacuation automatisée (98) des matrices (15) et leur acheminement vers une zone de traitement (12) pour le retraitement des matrices (15),
- un retraitement des matrices (15) dans la zone de traitement (12) et
- un acheminement automatisé (76) des matrices (15) depuis la zone de traitement (12) vers le train de transfert (60) et l'application/l'acheminement (76) des matrices (15) sur le matériau support (64, 66) sous forme de bande transporté en continu dans le sens du transport (84).

14. Installation de production selon la revendication 13, **caractérisée en ce que** le dispositif de pressage (82) pouvant être chauffé est une presse à rouleaux ou une installation de contrecollage à lit plat et comprend des dispositifs à cylindres (86, 88) à température réglable et/ou des émetteurs d'IR et/ou des ventilateurs à air chaud.

15. Installation de production selon la revendication 13, **caractérisée en ce que** le dispositif de pressage (82) pouvant être chauffé présente des cylindres (86, 88) à température réglable, entre lesquels est transporté un composite constitué par un matériau support (64, 66) sous forme de bande et la matrice (15) dans le sens du transport (84).

16. Installation de production selon la revendication 13, **caractérisée en ce que** l'acheminement de la matrice traitée (15) vers le train de transfert (60) est effectué par un dispositif de manipulation automatisé, en particulier un bras robotisé.

17. Installation de production selon la revendication 13, **caractérisée en ce que** l'évacuation (98) de la matrice (15) est effectuée par un dispositif de manipulation automatisé, qui tourne la matrice (15) de manière telle que sa face structurée (78) est accessible lorsqu'elle atteint la zone de traitement (12) .

18. Installation de production selon la revendication 13, **caractérisée en ce que** le sens du transport (84) du matériau support (64, 66) sous forme de bande à travers le train de transfert (60) est opposé au sens du transport (104) des matrices (15) à travers la zone de traitement (12).

19. Installation de production selon la revendication 13, **caractérisée en ce que** le train de transfert (60) présente un poste de déroulement (62) pour le matériau support (64, 66) sous forme de bande.

20. Installation de production selon la revendication précédente, **caractérisée en ce qu'**un poste d'application (68) pour le matériau adhésif, l'adhésif pulvérisé ou l'adhésif en filet est associé au poste de déroulement (62) pour le matériau support (64, 66) sous forme de bande.

21. Installation de production selon la revendication 13, **caractérisée en ce que** le train de transfert (60) présente un poste d'enroulement (100) pour le matériau support (64, 66) sous forme de bande.

22. Installation de production selon l'une quelconque des revendications précédentes, **caractérisée en ce que** le poste d'enroulement (100) présente une alimentation (95) pour une couche intermédiaire (97) qui sépare les unes des autres les structures sensibles sur le côté visuel du matériau support (64, 66) sous forme de bande dans l'état enroulé.

23. Installation de production selon la revendication 13, **caractérisée en ce que** la position de prélèvement (96) pour la matrice (15) du matériau support (64, 66) sous forme de bande est disposée en aval d'un dispositif de refroidissement (90).

24. Installation de production selon la revendication 13, **caractérisée en ce que** le site d'application (74) pour la matrice (15) sur le matériau support (64, 66) sous forme de bande est situé en amont du dispositif de pressage (82) pouvant être chauffé, vu dans le sens du transport (84).
